(19)

Europäisches
Patentamt
European
Patent Office
Office européen
des brevets

(11)  **EP 2 487 518 A1**

(12)  **EUROPEAN PATENT APPLICATION**
published in accordance with Art. 153(4) EPC

(43) Date of publication:
**15.08.2012 Bulletin 2012/33**

(51) Int Cl.:
***G02B 13/00*** *(2006.01)*      ***G02B 13/18*** *(2006.01)*

(21) Application number: **10821701.9**

(22) Date of filing: **21.09.2010**

(86) International application number:
**PCT/JP2010/005707**

(87) International publication number:
**WO 2011/043023 (14.04.2011 Gazette 2011/15)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **06.10.2009 JP 2009232162
09.10.2009 JP 2009235463**

(71) Applicant: **Sony Corporation
Tokyo 108-0075 (JP)**

(72) Inventor: **BABA, Tomohiko
Tokyo 108-0075 (JP)**

(74) Representative: **Jackson, Jonathan Andrew
D Young & Co LLP
120 Holborn
London EC1N 2DY (GB)**

(54)  **OPTICAL UNIT AND IMAGE PICKUP DEVICE**

(57)    [Object] To provide an optical unit and an image pickup apparatus that are capable of realizing a high-resolution and high-performance image pickup system.

[Solving Means] An image pickup lens (100) includes a first lens group (110) and a second lens group (120) that are sequentially arranged from an object side (OBJS) to an image plane (140) side. The first lens group (110) includes a first lens element (111), a second lens element (112), a first transparent body (113), and a third lens element (114) that are sequentially arranged from the object side (OBJS) to the image plane (140) side. The second lens group (120) includes a fourth lens element (121), a second transparent body (122), a second buffer layer (123), and a fifth lens element (124) that are sequentially arranged from the object side (OBJS) to the image plane (140) side. The first lens element (111) and the second lens element (112) of the first lens group (110) form a doublet lens.

111 : First lens element
112 : Second lens element
113 : First transparent body (first glass substrate)
114 : Third lens element
121 : Fourth lens element
122 : Second transparent body (second glass substrate)
123 : Second buffer layer
124 : Fifth lens element
200 : Doublet lens

FIG.1

EP 2 487 518 A1

**Description**

Technical Field

The present invention relates to an optical unit and an image pickup apparatus that are applied to image pickup equipment.

Background Art

For image pickup equipment mounted on cellular phones, personal computers (PCs), and the like in recent years, a high resolution, low costs, and miniaturization are strongly demanded.

A cell pitch of an image pickup device such as a CCD (Charge Coupled Device) image sensor and a CMOS (Complementary Metal Oxide Semiconductor) image sensor is demanded to become dramatically small, and high imaging performance having a smaller optical aberration, particularly axial chromatic aberration than a normal optical system is demanded in an optical system.

Further, regarding the demand on costs, a technique to cut costs by forming a large number of lenses in a wafer at the same time is known.

Furthermore, Patent Document 1 discloses a technique on a doublet lens. Here, a replica lens is recoated at one position to thus realize a high NA.

Patent Document 1: Japanese Patent Application Laid-open No. 2005-517984
Patent Document 2: Japanese Patent Application Laid-open No. 2003-1550

Disclosure of the Invention

Problems to be solved by the Invention

Patent Document 1 above merely describes a convex-convex structure. Such a structure is useful in cases of an objective lens and a collimator lens.

However, an image pickup optical system as a predetermined application is not useful since it cannot remove an aberration in the case of a convex-convex structure.

Moreover, only an example of forming a lens on one surface of a single glass substrate is described, and a specific design example is not shown.

Although Patent Document 2 above describes an optical design of a unit structure, an astigmatism is ±0.5 mm, and a spherical aberration is also as large as about ±0.5 mm. Moreover, an F value Fno is as dark as 6.6, and a radius of an effective image circle is as small as ±0.25 mm, and thus the optical design cannot be used in any camera module standard.

The present invention aims at providing an optical unit and an image pickup apparatus that are capable of realizing a high-resolution and high-performance image pickup optical system.

The present invention also aims at providing an optical unit and an image pickup apparatus that are capable of sufficiently reducing aberrations in a unit structure and realizing a lens optimal for a VGA standard and the like.

Means for solving the Problems

According to a first aspect of the present invention, there is provided an optical unit including: a first lens group; and a second lens group, the first lens group and the second lens group being sequentially arranged from an object side to an image plane side, the first lens group including a first lens element, a second lens element, a first transparent body, and a third lens element that are sequentially arranged from the object side to the image plane side, the first lens element and the second lens element forming a doublet lens, the second lens group including a fourth lens element, a second transparent body, and a fifth lens element that are sequentially arranged from the object side to the image plane side.

According to a second aspect of the present invention, there is provided an image pickup apparatus including: an image pickup device; and an optical unit that forms an image of a subject image on the image pickup device and includes a first lens group and a second lens group, the first lens group and the second lens group being sequentially arranged from an object side to an image plane side, the first lens group including a first lens element, a second lens element, a first transparent body, and a third lens element that are sequentially arranged from the object side to the image plane side, the first lens element and the second lens element forming a doublet lens, the second lens group including a fourth lens element, a second transparent body, and a fifth lens element that are sequentially arranged from the object side to the image plane side.

According to a third aspect of the present invention, there is provided an optical unit including a lens group in which lenses are sequentially arranged from an object side to an image plane side, the lens group including a first lens element, a transparent body, and a second lens element that are sequentially arranged from the object side to the image plane side.

According to a fourth aspect of the present invention, there is provided an optical unit, including a lens group in which lenses are sequentially arranged from an object side to an image plane side, the lens group including a first lens element, a buffer layer, a transparent body, and a second lens element that are sequentially arranged from the object side to the image plane side.

According to a fifth aspect of the present invention, there is provided an image pickup apparatus including: an image pickup device; and an optical unit that forms an image of a subject image on the image pickup device and includes a lens group in which lenses are sequentially arranged from an object side to an image plane side, the lens group including a first lens element, a transparent body, and a second lens element that are sequentially arranged from the object side to the image plane side.

Effect of the Invention

According to the present invention, a high-resolution and high-performance image pickup optical system can be realized by applying a doublet lens called wafer opt.

In addition, according to the present invention, a lens optimal for a VGA standard and the like, that is capable of taking advantage of wafer level optics and sufficiently reducing aberrations in a unit structure can be realized.

Brief Description of Drawings

[Fig. 1] A diagram showing a structural example of an image pickup lens according to a first embodiment of the present invention.
[Fig. 2] A diagram schematically showing an example of a surface shape of a fourth lens element of this embodiment.
[Fig. 3] A diagram showing lenses and a substrate constituting lens groups of the image pickup lens of this embodiment and surface numbers assigned to a cover glass constituting an image pickup portion.
[Figs. 4] Aberration diagrams respectively showing a spherical aberration, an astigmatism, and a distortion in Example 1.
[Fig. 5] A diagram showing a structural example of an image pickup lens according to a second embodiment of the present invention.
[Figs. 6] Aberration diagrams respectively showing a spherical aberration, an astigmatism, and a distortion in Example 2.
[Fig. 7] A diagram showing a structural example of an image pickup lens according to a third embodiment of the present invention.
[Figs. 8] Aberration diagrams respectively showing a spherical aberration, an astigmatism, and a distortion in Example 3.
[Fig. 9] A diagram showing a structural example of an image pickup lens according to a fourth embodiment of the present invention.
[Fig. 10] A diagram showing lenses and a substrate constituting lens groups of the image pickup lens of this embodiment and a surface number assigned to a cover glass constituting an image pickup portion.
[Figs. 11] Aberration diagrams respectively showing a spherical aberration, an astigmatism, and a distortion in Example 4.
[Fig. 12] A diagram showing a structural example of an image pickup lens according to a fifth embodiment of the present invention.
[Figs. 13] Aberration diagrams respectively showing a spherical aberration, an astigmatism, and a distortion in Example 5.
[Fig. 14] A diagram schematically showing a wafer level optic according to a sixth embodiment of the present invention.
[Fig. 15] A block diagram showing a structural example of an image pickup apparatus adopting an image pickup lens according to a seventh embodiment of the present invention.

Best Modes for Carrying Out the Invention

Hereinafter, embodiments of the present invention will be described with reference to the drawings.

It should be noted that descriptions will be given in the following order.

1. First embodiment (first structural example of image pickup lens adopting optical unit)
2. Second embodiment (second structural example of image pickup lens adopting optical unit)
3. Third embodiment (third structural example of image pickup lens adopting optical unit)
4. Fourth embodiment (fourth structural example of image pickup lens adopting optical unit)
5. Fifth embodiment (fifth structural example of image pickup lens adopting optical unit)
6. Sixth embodiment (general idea of wafer opt)
7. Seventh embodiment (structural example of image pickup apparatus)

<1. First embodiment>

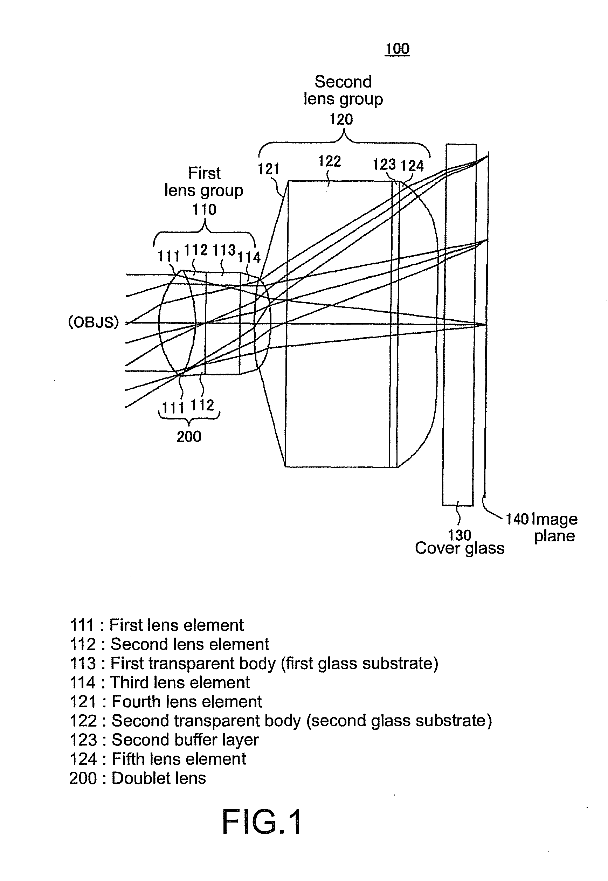

Fig. 1 is a diagram showing a structural example of an image pickup lens adopting an optical unit according to a first embodiment of the present invention.

As shown in Fig. 1, an image pickup lens 100 according to the first embodiment includes a first lens group 110, a second lens group 120, a cover glass 130, and an image plane 140 that are sequentially arranged from an object side OBJS to an image plane side.
The image pickup lens 100 is formed as a single focus lens. In addition, the first lens group 110 and the second lens group 120 form an optical unit.

The first lens group 110 and the second lens group 120 are each constituted of a bonded body including a plurality of lens elements sandwiching a transparent body.

Specifically, the first lens group 110 is constituted of a bonded body including a first lens element 111, a second lens element 112, a first transparent body 113, and a third lens element 114 that are sequentially arranged from the object side OBJS to the image plane 140 side.
The first lens element 111 and the second lens element 112 form a doublet lens 200.

The second lens group 120 is constituted of a bonded body including a fourth lens element 121, a second transparent body 122, a buffer layer 123, and a fifth lens element 124 that are sequentially arranged from the object side OBJS to the image plane 140 side.
The buffer layer 123 is a part of a lens and formed of the same material as the lens. The buffer layer 123 is designed and produced after determining a portion at which accuracy as a buffer layer cannot be obtained.

As described above, since the first lens group 110 and the second lens group 120 are each constituted of the bonded body including the lens elements and the transparent body, the lens surface of the image pickup lens 100 as a whole includes a first surface SF1, a second surface SF2, a third surface SF3, and a fourth surface SF4.
The first surface SF1 is formed by an object side surface of the first lens element 111, and the second surface SF2 is formed by an image plane side surface of the third lens element 114.
The third surface SF3 is formed by an object side surface of the fourth lens element 121, and the fourth surface SF4 is formed by an image plane side surface of the fifth lens element 124.

The image pickup lens 100 of this embodiment is basically formed such that one of the first lens group 110 and the second lens group 120 has a positive power and the other has a negative power.

In the image pickup lens 100 as a single focus lens, it is assumed that an imaging area (image reception area) of a solid-state image pickup device such as a CC sensor and a CMOS sensor is provided on the image plane 140.
The cover glass 130 is interposed between the fourth surface SF4 and the image plane 140. Other than the cover glass 130, an infrared cut filter, and a lowpass filter that are formed of a resin or glass, an optical member may be provided between the fourth surface SF4 and the image plane 140.

It should be noted that in Fig. 1 in this embodiment, the left-hand side is the object side (front), and the right-hand side is the image plane side (back).
In addition, a light flux that has entered from the object side is imaged on the image plane 140.

Hereinafter, the structure of the image pickup lens of this embodiment and operations thereof will be described.

The image pickup lens 100 has a 2-group 7-layer structure.
In the first lens group 110, the doublet lens 200 formed by the first lens element 111 and the second lens element 112 is a plane-convex lens that is convex on the object side and planar on the image plane side.
Further, the third lens element 114 is a plane-concave lens that is planar on the object side and concave on the image plane side.
In the second lens group 120, the fourth lens element 121 is a plane-concave lens that is concave on the object side and planar on the image plane side.
The fifth lens element 124 is a plane-convex lens that is planar on the object side and convex on the image plane side.
For example, as will be described later, the fifth lens element 124 is a plane-concavo-convex lens that is planar on the object side and concavo-convex on the image plane side.

Specifically, in the first lens group 110, the first lens element 111 is formed by an aspheric lens whose surface on the object side forming the first surface SF1 is convex and that has a large Abbe number $v_{L1}$.
The second lens element 112 is formed by a lens having a small Abbe number $v_{L2}$.
The first transparent body 113 is formed by a flat-plate glass substrate (transparent substrate) having, for example, a small Abbe number $v_{g1}$ and a high refractive index $n_{g1}$.
The third lens element 114 is formed by an aspheric lens whose surface on the image plane side forming the second surface SF2 is concave.
In the first lens group 110, the doublet lens 200 is formed by forming the second lens element 112 on the object side of the first transparent body (first glass substrate) 113 and bonding the first lens element 111 thereto on the object side OBJS.
In addition, the third lens element 114 is bonded to the image plane side surface of the first transparent body (first glass substrate) 113.
Moreover, a diaphragm is attached on the object side as a material having a light-shield operation, such as a chromium film.
In the second lens group 120, the fourth lens element 121 is formed by an aspheric lens whose object side surface forming the third surface SF3 is concave.
The second transparent body 122 is formed by a flat-plate glass substrate having a large Abbe number $v_{g1}$ and a small refractive index $n_{g2}$.
The fourth lens element 121 is bonded to the object side surface of the second transparent body (second glass substrate) 122.
The second buffer layer 123 is formed on the image plane side surface of the second transparent body (second glass substrate) 122, and the fifth lens element 124 is bonded to the image plane side of the second buffer layer 123.
The fifth lens element 124 is formed by an aspheric lens whose image plane side surface forming the fourth surface SF4 is convex or concavo-convex.

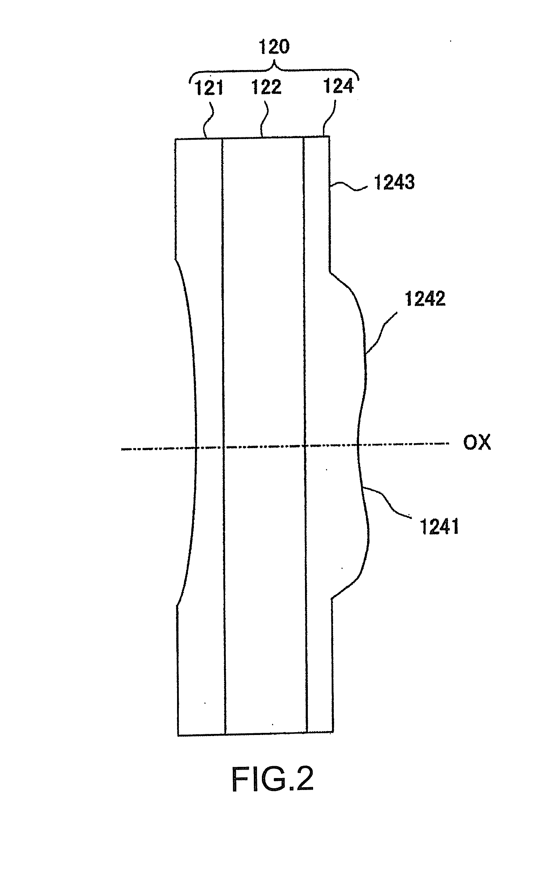

Fig. 2 is a diagram schematically showing an example of a surface shape of the fifth lens element 124 of this embodiment.
In Fig. 2, the second buffer layer is omitted in the second lens group 120.
The fifth lens element 124 shown in Fig. 2 is formed by a plane-concavo-convex lens that is planar on the object side and concavo-convex on the image plane side.
The fifth lens element 124 includes a concave portion 1241 that is concave at a circumferential portion of an optical axis including an optical axis OX and a convex portion 1242 that is convex at a circumferential portion on an outer side of the concave portion 1241.
The fifth lens element 124 also includes a plane portion 1243 that is planar at a circumferential portion on an outer side of the convex portion 1242.
It should be noted that in descriptions below, the first glass substrate may be denoted by the same reference numeral as the first transparent body 113, and the second glass substrate may be denoted by the same reference numeral as the second transparent body 122.
The first lens element 111, the second lens element 112, the third lens element 114, the fourth lens element 121, and the fifth lens element 124 are formed of a UV-curable resin, a heat-curable resin, plastic, or the like.
Here, the buffer layer 123 is basically a part of the lens and formed of the same glass material as the lens material. The buffer layer 123 is designed and produced while defining a portion with no accuracy as another buffer layer.
The reason why there is no accuracy is because, since a contraction of 5% to 7% occurs during curing of a UV-curable resin, a heat-curable resin, plastic, or the like, a contraction behavior cannot be predicted due to the bonding with respect to the substrate. Moreover, the buffer layer is used for absorbing a thickness error of the transparent body (transparent substrate).
Although this embodiment shows an example where the buffer layer is arranged in the second lens group 120, the buffer layer may be arranged in the first lens group 110 as necessary.
As described above, the image pickup lens 100 according to the first embodiment has a 2-group 7-layer structure.
The first lens group 110 is formed by the first surface SF1 of the aspheric lens that is convex and has a large Abbe number $v_{s1}$, the first transparent body (first glass substrate) 113 having a small Abbe number $v_{g1}$ and a high refractive index $n_{g1}$, and the second surface SF2 of the concave aspheric lens, that are arranged from the object side to the image plane side.
The second lens group 120 is formed by the third surface SF3 of the concave aspheric lens, the second transparent body (second glass substrate) 122 having a large Abbe number $v_{g2}$ and a low refractive index $n_{g2}$, and the fourth surface SF4 of the aspheric lens, that are arranged from the object side to the image plane side.
The image pickup lens 1 of this embodiment as a single focus lens is structured to satisfy the following conditional expressions (1) to (14).
In the conditional expression (1), the refractive index $n_{L1}$ of the first lens element 111 forming the doublet lens 200 is defined.
[Expression 1]

$$1.4 \leq n_{L1} \leq 1.65 \ ... \ (1)$$

The first lens element 111 corrects more aberrations when it optically has a larger refractive index, but since the physical property of the material is limited, the selection range is limited. This condition is the conditional expression (1).
In the conditional expression (2), the Abbe number $v_{L1}$ of the first lens element 111 forming the doublet lens 200 is defined. In the conditional expression (3), the Abbe number $v_{L2}$ of the second lens element 112 forming the doublet lens 200 is defined.
[Expression 2]

$$38 \leq v_{L1} \leq 80 \ ... \ (2)$$

[Expression 3]

$$18 \leq v_{L2} \leq 45 \ ... \ (3)$$

The first lens element 111 and the second lens element 112 have functions to cancel out chromatic aberrations by the first lens element 111 having a large Abbe number and the second lens element 112 having a small Abbe number. Optimal conditions therefor are the conditional expressions (2) and (3).
In the conditional expression (4), the focal length $f_{L12}$ of the doublet lens 200 is defined.
[Expression 4]

$$1 \leq f_{L12} \leq 10 \ ... \ (4)$$

As in the conditional expressions (7) and (8) to be described later, it is favorable for one of the first lens group 110 and the second lens group 120 to have a positive power and the other one to have a negative power for correcting aberrations by a synergetic effect.
Here, since a total optical length is required to be short, it is desirable for the first lens group 110 to have a positive power and the second lens group 120 to have a negative power.
Moreover, as a whole, the aberrations are corrected more when the third lens element 114 and the fourth lens element 121 face each other with negative powers.
Therefore, the doublet lens 200 constituted of the first lens element 111 and the second lens element 112 needs to have an adequate positive power. This condition is the conditional expression (4).
In the conditional expression (5), the curvature radius R2 of the second surface formed by the bonding surface between the first lens element 111 and the second lens element 112 of the doublet lens 200 is defined.
[Expression 5]

$$-\infty \leq R2 \leq -0.5 \ ... \ (5)$$

Regarding the bonding surface of the doublet lens 200, there exists an optimal value for convenience of an aberration correction.
Basically, the sine condition is satisfied more as the second lens element 112 has more negative power. The optimal condition is the conditional expression (5).

In the conditional expression (6), an absolute value $\Delta CTE$ of a difference between the CTE value $CTE_{g1}$ of the first transparent body 113 and the CTE value $CTE_{g2}$ the second transparent body 122 is defined.
[Expression 6]

$$\Delta CTE \equiv |CTE_{g1} - CTE_{g2}|$$

$$\Delta CTE < 1.0e-6 \ ... \ (6)$$

Production of the optical unit of this embodiment includes a bonding process of the first lens group 110 and the second lens group 120, and a temperature is more or less increased at that time.
At this time, if expansion coefficients of the substrates (transparent bodies) of the first lens group 110 and the second lens group 120 differ, a distortion is caused in the lens. The optimal condition is the conditional expression (6).
In the conditional expressions (7) and (8), conditions of the focal length $f_{g1}$ of the first lens group 110 and focal length $f_{g2}$ of the second lens group 120 are defined.
[Expression 7]

$$1.2 \leq f_{g1} \leq 8 \ ... \ (7)$$

[Expression 8]

$$-10 \leq f_{g2} \leq -1.2 \ .. \ (8)$$

As described above, it is favorable for one of the first lens group 110 and the second lens group 120 to have a positive power and the other one to have a negative power for correcting aberrations by a synergetic effect.
Here, since a total optical length is required to be short, it is desirable for the first lens group 110 to have a positive power and the second lens group 120 to have a negative power.
However, if the conditions become too strict, even an extremely-small inter-group decentering largely influences characteristics, and a production tolerance is lowered. Optimal conditions therefor are the conditional expressions (7) and (8).
In the conditional expressions (9) and (10), the refractive index $n_{g2}$ and Abbe number $v_{g2}$ of the second transparent body 122 are defined.
[Expression 9]

$$1.3 \leq n_{g2} \leq 1.82 \ ... \ (9)$$

[Expression 10]

$$35 \leq v_{g2} \leq 90 \ ... \ (10)$$

Opposite to the first lens group 110, since the second lens group 120 needs to correct an astigmatism and a coma aberration more, the refractive index of the glass substrate is smaller the better.
An upper limit is thus determined, and a lower limit is determined based on the restriction on the material as described above. An optimal condition is the conditional expression (9).

The second lens group 120 has an optimal total achromatism by the second transparent body (second substrate) 122 having a large Abbe number. A small Abbe number, that is, a large dispersion causes a chromatic aberration that has been eliminated up to that time, which is unfavorable. Moreover, an upper limit is determined based on the limit on a material as described above. Therefore, an optimal condition is the conditional expression (10).

In the conditional expression (11), the curvature radius $R_{s5}$ of the convex surface of the fifth lens element 124 on the image plane side is defined.

[Expression 11]

$$R_{s5} \leq -3 \text{ or } R_{s5} \geq 5 \ldots (11)$$

When the curvature of the convex surface of the fifth lens element 124 on the image plane side (fourth surface SF4) is positive in the extreme, the peripheral surface protrudes more on the image plane side than that in the vicinity of the optical axis, and light reflected by the image pickup device is reflected again by the fourth surface SF4, with the result that a ghost is apt to occur unfavorably.

At the same time, in such a case, since more peripheral light is raised in the periphery, an incident angle with respect to the sensor becomes sharp, which is unfavorable.

Further, there is also a problem that a back focus becomes short due to the protrusion. In addition, if the negative curvature becomes too large, the curvature of the image plane becomes minus, with the result that it becomes difficult to carry out the correction.

An optimal condition for securing a sufficient back focus, satisfying a desirable imager incident angle, and obtaining desirable camera performance is the conditional expression (11).

In the conditional expression (12), the thickness $T_{g1}$ of the first transparent body 113 is defined.

[Expression 12]

$$0.2 \leq T_{g1} \leq 0.7 \text{ [mm]} \ldots (12)$$

For reducing an astigmatism and coma aberration that are caused in the first lens group 110, it is better to make the first transparent body (first glass substrate 9 113 thin, and thus there is an upper limit. Further, when the first transparent body 113 is too thin, warpage is caused in the substrate to inhibit production. Therefore, there is a lower limit. Thus, an optimal condition is the conditional expression (12).

In the conditional expression (13), the thickness $T_{g2}$ of the second transparent body 122 is defined.

[Expression 13]

$$0.2 \leq T_{g2} \leq 2.5 \text{ [mm]} \ldots (13)$$

Opposite to the first lens group 110, since the second lens group 120 needs to correct an astigmatism and a coma aberration more, it is better to set the thickness of the second transparent body (second glass substrate) 122 at a thickness that does not cause too much aberrations.

Further, the thickness also depends on the total optical length. If the thickness is too large, too much coma aberrations in particular are caused, with the result that characteristics are deteriorated. If the thickness is too small, the aberration correction becomes insufficient. Alternatively, warpage is caused in the substrate as described above, and production is thus inhibited. Therefore, an optimal condition is the conditional expression (13).

The lower limit of the thicknesses $T_{g1}$ and $T_{g2}$ are set to 0.2 [mm] since there are marginal widths. Without the marginal widths, about 0.1 [mm] is within an allowable range.

In the conditional expression (14), the thickness $T_{buf}$ of the buffer layer 124 is defined.

8

[Expression 14]

$$0.005 \le T_{buf} \le 0.20 \ [mm] \ \dots \ (14)$$

In the case where the periphery is convex or almost convex, a buffer layer becomes necessary. This is because shape accuracy of a lens near a substrate is difficult to be obtained when attaching the lens to the substrate.
If the thickness is too large, an aberration occurs, and optical characteristics, particularly an astigmatism and a coma aberration, deteriorate. If the thickness is too small, shape accuracy in the vicinity of a boundary cannot be obtained. Therefore, an optimal condition is the conditional expression (14).

The conditional expressions (1) to (14) described above are common to Examples 1 to 3 below, and by appropriately adopting them as necessary, more-favorable imaging performance suitable for individual image pickup devices or an image pickup apparatus, and a compact optical system are realized.

It should be noted that the aspheric shape of the lens is expressed by the following expression, with the direction from the object side to the image plane side being a positive direction, k representing a cone constant, A, B, C, and D each representing an aspheric constant, and r representing a center curvature radius. y represents a height of a light beam from the optical axis, and c represents an inverse number of the center curvature radius r (1/r).
It should be noted that X represents a distance from a tangent plane with respect to an apex of the aspheric shape, A represents a fourth-order aspheric constant, B represents a sixth-order aspheric constant, C represents an eighth-order aspheric constant, D represents a tenth-order aspheric constant, E represents a twelfth-order aspheric constant, and F represents a fourteenth-order aspheric constant.

[Expression 15]

Aspheric equation

$$X = \frac{cy^2}{1+\sqrt{1-(1+k)c^2 y^2}} + Ay^4 + By^6 + Cy^8 + Dy^{10} + Ey^{12} + Fy^{14}$$

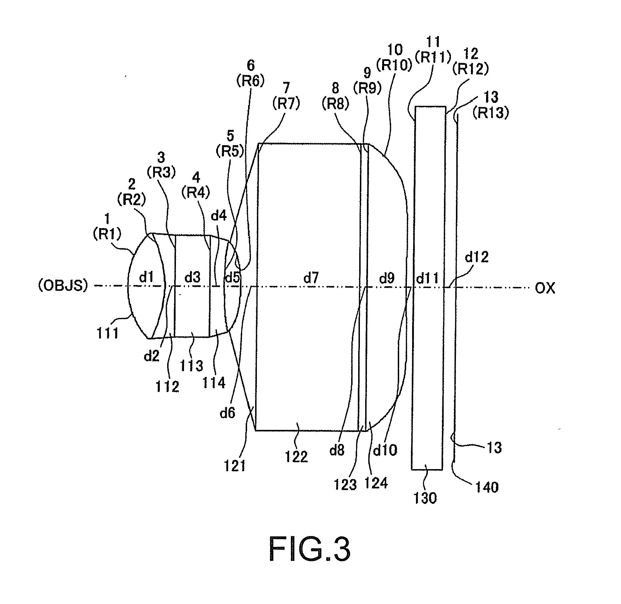

Fig. 3 is a diagram showing the lenses and the substrate constituting the lens groups of the image pickup lens of this embodiment and surface numbers assigned to the cover glass constituting an image pickup portion.

Specifically, a first surface number is assigned to the object side surface (convex surface) of the first lens element 111, and a second surface number is assigned to the boundary surface (bonding surface) between the image plane side surface of the first lens element 111 and the object side surface of the second lens element 112.
A third surface number is assigned to the boundary surface (bonding surface) between the image plane side surface of the second lens element 112 and the object side surface of the first transparent body (first glass substrate) 113.
A fourth surface number is assigned to the boundary surface (bonding surface) between the image plane side surface of the first transparent body (first glass substrate) 113 and the object side surface of the third lens element 114. A fifth surface number is assigned to the image plane side surface (concave surface) of the third lens element 114.
A sixth surface number is assigned to the object side surface (concave surface) of the fourth lens element 121, and a seventh surface number is assigned to the boundary surface (bonding surface) between the image plane side surface of the fourth lens element 121 and the object side surface of the second transparent body (second glass substrate) 122.
An eighth surface number is assigned to the boundary surface (bonding surface) between the image plane side surface of the second transparent body (second glass substrate) 122 and the object side surface of the second buffer layer 123, and a ninth surface number is assigned to the boundary surface (bonding surface) between the image plane side surface of the second buffer layer 123 and the object side surface of the fifth lens element 124.
A tenth surface number is assigned to the image plane side surface (aspheric surface) of the fifth lens element 124, and an eleventh surface number is assigned to the object side surface of the cover glass 130. Further, a twelfth surface number is assigned to the image plane side surface of the cover glass 130.

Further, as shown in Fig. 3, in the image pickup lens 100 of this embodiment, the center curvature radius of the object side surface of the first lens element 111 (#1) is set to be R1.
The center curvature radius of the boundary surface (bonding surface) 2 between the image plane side surface of the first lens element 111 and the object side surface of the second lens element 112 is set to be R2.
The center curvature radius of the boundary surface (bonding surface) 3 between the image plane side surface of the second lens element 112 and the object side surface of the first transparent body (first glass substrate) 113 is set to be R3. The center curvature radius of the boundary surface (bonding surface) 4 between the image plane side surface of the first transparent body (first glass substrate) 113 and the object side surface of the third lens element 114 is set to be R4, and the center curvature radius of the image plane side surface (concave surface) 5 of the third lens element 114 is set to be R5.

The center curvature radius of the object side surface (concave surface) 6 of the fourth lens element 121 is set to be R6, and the center curvature radius of the boundary surface (bonding surface) 7 between the image plane side surface of the fourth lens element 121 and the object side surface of the second transparent body (second glass substrate) 122 is set to be R7.

The center curvature radius of the boundary surface (bonding surface) 8 between the image plane side surface of the second transparent body (second glass substrate) 122 and the object side surface of the second buffer layer 123 is set to be R8.

The center curvature radius of the boundary surface (bonding surface) 9 between the image plane side surface of the second buffer layer 123 and the object side surface of the fifth lens element 124 is set to be R9.

The center curvature radius of the image plane side surface (aspheric surface) 10 of the fifth lens element 124 is set to be R10, and the center curvature radius of the object side surface 11 of the cover glass 130 is set to be R11. The center curvature radius of the image plane side surface 12 of the cover glass 130 is set to be R12. The center curvature radius of the surface 13 of the image plane 140 is set to be R13.

It should be noted that the surfaces 3, 4, 7, 8, 9, 11, 12, and 13 and the center curvature radiuses R3, R4, R7, R8, R9, R11, F12, and R13 are infinite (INFINITY).

Further, as shown in Fig. 3, a distance between the surfaces 1 and 2 as a thickness of the first lens element 111 on the optical axis OX is set to be d1, and a distance between the surfaces 2 and 3 as a thickness of the second lens element 112 on the optical axis OX is set to be d2.

A distance between the surfaces 3 and 4 as a thickness of the first transparent body (first glass substrate) 113 on the optical axis OX is set to be d3, and a distance between the surfaces 4 and 5 as a thickness of the third lens element 114 on the optical axis OX is set to be d4.

A distance between the image plane side surface 5 of the third lens element 114 and the object side surface 6 of the fourth lens element 121 on the optical axis OX is set to be d5.

A distance between the surfaces 6 and 7 as a thickness of the fourth lens element 121 on the optical axis OX is set to be d6, and a distance between the surfaces 7 and 8 as a thickness of the second transparent body (second glass substrate) 122 on the optical axis OX is set to be d7.

A distance between the surfaces 8 and 9 as a thickness of the second buffer layer 123 on the optical axis OX is set to be d8, and a distance between the surfaces 9 and 10 as a thickness of the fifth lens element 124 on the optical axis OX is set to be d9.

A distance between the image plane side surface 10 of the fifth lens element 124 and the object side surface 11 of the cover glass 130 on the optical axis OX is set to be d10, and a distance between the object side surface 11 and the image plane side surface as a thickness of the cover glass 130 on the optical axis OX is set to be d11.

Hereinafter, Example 1 that uses specific numerical values of the image pickup lens will be described. It should be noted that in Example 1, the surface numbers as shown in Fig. 3 are assigned to the lens elements, buffer layer, and glass substrates (transparent bodies) of the image pickup lens 100 and the cover glass 130 constituting the image pickup portion.

[Example 1]

Tables 1, 2, 3, and 4 show numerical values of Example 1. The numerical values of Example 1 correspond to the image pickup lens 100 shown in Fig. 1.

Table 1 shows the curvature radiuses (R: mm), intervals (d: mm), refractive indexes (nd), and dispersion values ($v_d$) of the lens elements, buffer layer, and glass substrates (transparent bodies) corresponding to the surface numbers of the image pickup lens and the cover glass constituting the image pickup portion in Example 1.

[Table 1]

| Structural data of lens of Example 1 | | | | |
|---|---|---|---|---|
| Surface No. | R | d | Nd | $v_d$ |
| 1 : | 1.021 | 0.484 | 1.51 | 53.1 |
| 2 : | -1.502 | 0.126 | 1.54 | 41.7 |

(continued)

| Structural data of lens of Example 1 | | | | |
|---|---|---|---|---|
| Surface No. | R | d | Nd | $\nu_d$ |
| 3 : | INFINITY | 0.459 | 1.64 | 60.1 |
| 4 : | INFINITY | 0.194 | 1.54 | 41.7 |
| 5 : | 5.214 | 0.220 | | |
| 6 : | -1.833 | 0.213 | 1.54 | 41.7 |
| 7 : | INFINITY | 1.390 | 1.64 | 60.1 |
| 8 : | INFINITY | 0.531 | 1.54 | 41.7 |
| 9 : | INFINITY | 0.08 | 1.54 | 41.7 |
| 10 : | 10.951 | 0.100 | | |
| 11 : | INFINITY | 0.400 | 1.52 | 64.1 |
| 12 : | INFINITY | 0.160 | | |
| 13 : | INFINITY | 0.000 | | |

Table 2 shows the fourth-, sixth-, eighth-, and tenth-order aspheric constants of the surface 1 of the first lens element 111, the surface 5 of the second lens element 114, the surface 6 of the fourth lens element 121, and the surface 10 of the fifth lens element 124 that include the aspheric surface in Example 1.

In Table 2, K represents a cone constant, A represents a fourth-order aspheric constant, B represents a sixth-order aspheric constant, C represents an eighth-order aspheric constant, and D represents a tenth-order aspheric constant.
[Table 2]

| Aspheric surface data of Example 1 | | | | | |
|---|---|---|---|---|---|
| First surface | K: 0.459 | A: - 0.491E-01 | B: - 0.103E+00 | C: 0.1406E+00 | D: - 0.380E+00 |
| Fifth surface | K: 8.652 | A: 0.7096E-01 | B: 0.1556E+00 | C: - 0.534E+00 | D: 0.169E+01 |
| Sixth surface | K: 5.207 | A: - 0.190E+00 | B: - 0.101E+00 | C: - 0.809E-01 | D: - 0.209E+01 |
| Tenth surface | K: - 9.402 | A: - 0.423E-01 | B: 0.579E-02 | C: - 0.391E-02 | D: 0.468E-03 |

Table 3 specifically shows a focal length f, a numerical aperture F, a half field angle ω, and a lens length H of the image pickup lens 100 in Example 1.
Here, the focal length f is set to 3.78 [mm], the numerical aperture F is set to 2.8, the half field angle ω is set to 31.9 deg, and the lens length H is set to 4.37 [mm].
[Table 3]

| Structural data of Example 1 |
|---|
| f (focal length) = 3.78 mm |
| F (numerical aperture) = 2.8 |
| ω (half field angle) = 31.9 deg |
| H (total lens length) = 4.37 mm |

Table 4 shows that the conditional expressions (1) to (14) above are satisfied in Example 1.
[Table 4]

| Values of conditional expressions | |
| --- | --- |
| Conditional expression/Example | Example 1 |
| (1) $n_{L1}$ | 1.51 |
| (2) $\nu_{L1}$ | 53.1 |
| (3) $\nu_{L2}$ | 41.7 |
| (4) $f_{L12}$ | 3.18 |
| (5) R2 | -1.5 |
| (6) $\Delta$CTE | 0 |
| (7) $f_{g1}$ | 2.37 |
| (8) $f_{g2}$ | -2.74 |
| (9) $n_{g2}$ | 1.64 |
| (10) $\nu_{g2}$ | 60.1 |
| (11) RS5 | 11.0 |
| (12) $T_{g1}$ | 0.459 |
| (13) $T_{g2}$ | 1.39 |
| (14) $T_{buf}$ | 0.1 |

As shown in Table 4, in Example 1, the refractive index $n_{L1}$ of the first lens element 111 forming the doublet lens 200 in the first lens group 110 is set to 1.51, thus satisfying the condition defined in the conditional expression (1). The Abbe number $\nu_{L1}$ of the first lens element 111 forming the doublet lens 200 in the first lens group 110 is set to 53.1, thus satisfying the condition defined in the conditional expression (2).

The Abbe number $\nu_{L2}$ of the second lens element 112 forming the doublet lens 200 is set to 41.7, thus satisfying the condition defined in the conditional expression (3).

The focal length $f_{L12}$ of the doublet lens 200 is set to 3.18, thus satisfying the condition defined in the conditional expression (4).

The curvature radius R2 of the second surface formed by the bonding surface between the first lens element 111 and the second lens element 112 forming the doublet lens 200 is set to -1.5, thus satisfying the condition defined in the conditional expression (5).

The absolute value $\Delta$CTE of a difference between the CTE value $CTE_{g1}$ of the first transparent body (first transparent substrate) 113 and the CTE value $CTE_{g2}$ of the second transparent body (second transparent substrate) 122 is set to 0, thus satisfying the condition defined in the conditional expression (6).

The focal length $f_{g1}$ of the first lens group 110 is set to 2.37, thus satisfying the condition defined in the conditional expression (7).

The focal length $f_{g2}$ of the second lens group 120 is set to -2.74, thus satisfying the condition defined in the conditional expression (8).

The refractive index $n_{g2}$ of the second transparent body (second transparent substrate) 122 in the second lens group 120 is set to 1.64, and the Abbe number $\nu_{g2}$ is set to 0.1, thus satisfying the condition defined in the conditional expressions (9) and (10).

The curvature radius Rs5 of the image plane side convex surface of the fifth lens element 124 in the second lens group 120 is set to 11.0 [mm], thus satisfying the condition defined in the conditional expression (11).

The thickness $T_{g1}$ of the first transparent body (first transparent substrate) 113 in the first lens group 110 is set to 0.459 [mm], thus satisfying the condition defined in the conditional expression (12).

The thickness $T_{g2}$ of the second transparent body (second transparent substrate) 122 in the second lens group 120 is set to 1.39 [mm], thus satisfying the condition defined in the conditional expression (13).

The thickness $T_{buf}$ of the buffer layer 124 is set to 0.1 [mm], thus satisfying the condition defined in the conditional expression (14).

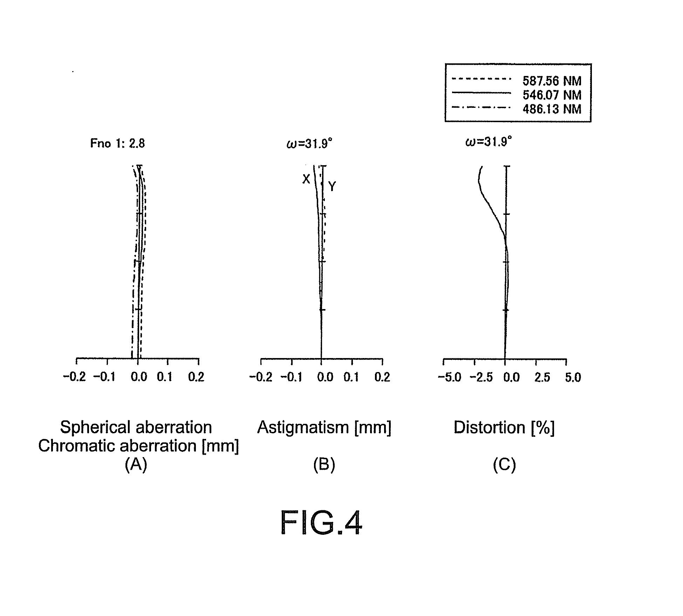

Figs. 4 are aberration diagrams respectively showing a spherical aberration (chromatic aberration), an astigmatism, and a distortion in Example 1. Fig. 4(A) shows the spherical aberration (chromatic aberration), Fig. 4(B) shows the astigmatism, and Fig. 4(C) shows the distortion.

As can be seen from Figs. 4, according to Example 1, the spherical aberration, astigmatism, and distortion are corrected favorably, and an image pickup lens including an optical unit having excellent imaging performance can be obtained.

<2. Second embodiment>

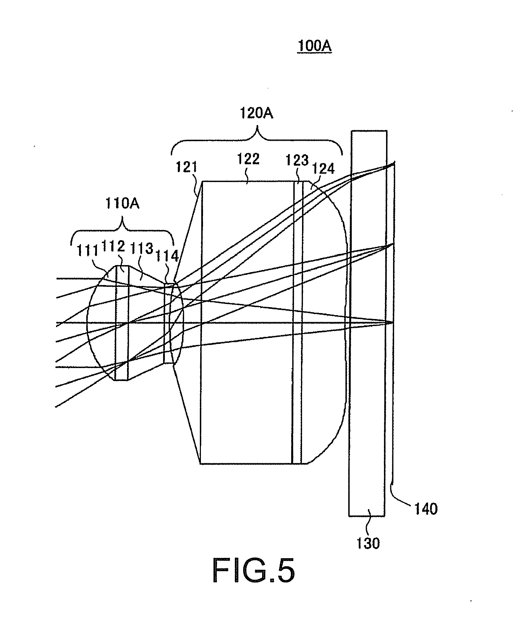

Fig. 5 is a diagram showing a structural example of an image pickup lens according to a second embodiment of the present invention.
The image pickup lens 100A of the second embodiment shown in Fig. 5 has basically the same structure as the image pickup lens 100 of the first embodiment shown in Fig. 1, and setting values of parameters of the constituent elements differ as shown in Example 2 below.
Therefore, specific description on the image pickup lens 100A will be omitted herein.
Hereinafter, Example 2 that uses specific numerical values of the image pickup lens will be described. It should be noted that in Example 2, the surface numbers as shown in Fig. 3 are assigned to the lens elements, buffer layer, and glass substrates (transparent bodies) of the image pickup lens 100A and the cover glass 130 constituting the image pickup portion.

[Example 2]

Tables 5, 6, 7, and 8 show numerical values of Example 2. The numerical values of Example 2 correspond to the image pickup lens 100A shown in Fig. 5.
Table 5 shows the curvature radiuses (R: mm), intervals (d: mm), refractive indexes (nd), and dispersion values ($v_d$) of the lens elements, buffer layer, and glass substrates (transparent bodies) corresponding to the surface numbers of the image pickup lens and the cover glass constituting the image pickup portion in Example 2.
[Table 5]

| Structural data of Example 2 | | | | |
|---|---|---|---|---|
| Surface No. | R | d | nd | $v_d$ |
| 1 : | 0.820 | 0.330 | 1.51 | 53.1 |
| 2 : | INFINITY | 0.137 | 1.58 | 29.0 |
| 3 : | INFINITY | 0.400 | 1.52 | 55.0 |
| 4 : | INFINITY | 0.060 | 1.54 | 41.6 |
| 5 : | 2.687 | 0.155 | | |
| 6 : | -1.903 | 0.199 | 1.54 | 41.6 |
| 7 : | INFINITY | 1.049 | 1.52 | 55.0 |
| 8 : | INFINITY | 0.519 | 1.54 | 41.6 |
| 9 : | INFINITY | 0.08 | 1.54 | 41.6 |
| 10 : | 7.390 | 0.050 | | |
| 11 : | INFINITY | 0.400 | 1.52 | 64.1 |
| 12 : | INFINITY | 0.084 | | |
| 13 : | INFINITY | 0.000 | | |

Table 6 shows the fourth-, sixth-, eighth-, and tenth-order aspheric constants of the surface 1 of the first lens element 111, the surface 5 of the second lens element 114, the surface 6 of the fourth lens element 121, and the surface 10 of the fifth lens element 124 that include the aspheric surface in Example 2.
In Table 6, K represents a cone constant, A represents a fourth-order aspheric constant, B represents a sixth-order aspheric constant, C represents an eighth-order aspheric constant, and D represents a tenth-order aspheric constant.
[Table 6]

| Aspheric surface data of Example 2 | | | | | |
|---|---|---|---|---|---|
| First surface | K: - 1.245 | A: 0.294E+00 | B: 0.873E-01 | C: 0.547E+00 | D: - 0.144E+00 |
| Fifth surface | K: 7.674 | A: 0.949E-01 | B: 0.5957E+00 | C: - 0.413E+01 | D: 0.233E+02 |
| Sixth surface | K: 9.284 | A: - 0.496E+00 | B: 0.174E+01 | C: - 0.158E+02 | D: - 0.279E+02 |
| Tenth surface | K: - 8.002 | A: - 0.795E-01 | B: 0.244E-01 | C: - 0.217E-01 | D: 0.384E-02 |

Table 7 specifically shows a focal length f, a numerical aperture F, a half field angle $\omega$, and a lens length H of the image pickup lens 100A in Example 2.
Here, the focal length f is set to 2.99 [mm], the numerical aperture F is set to 2.8, the half field angle $\omega$ is set to 31.8 deg, and the lens length H is set to 3.46 [mm].
[Table 7]

| Structural data of Example 2 |
|---|
| f (focal length) = 2.99 mm |
| F (numerical aperture) = 2.8 |
| $\omega$ (half field angle) = 31.8 deg |
| H (total lens length) = 3.46 mm |

Table 8 shows that the conditional expressions (1) to (14) above are satisfied in Example 2.
[Table 8]

| Values of conditional expressions | |
|---|---|
| Conditional expression/Example | Example 2 |
| (1) $n_{L1}$ | 1.51 |
| (2) $\nu_{L1}$ | 53.1 |
| (3) $\nu_{L2}$ | 29.0 |
| (4) $f_{L12}$ | 2.5 |
| (5) R2 | -$\infty$ |
| (6) $\Delta$CTE | 0 |
| (7) $f_{g1}$ | 1.96 |
| (8) $f_{g2}$ | -2.34 |
| (9) $n_{g2}$ | 1.52 |
| (10) $\nu_{g2}$ | 55.0 |
| (11) RS5 | 6.2 |
| (12) $T_{g1}$ | 0.4 |
| (13) $T_{g2}$ | 1.00 |
| (14) $T_{buf}$ | 0.1 |

As shown in Table 8, in Example 2, the refractive index $n_{L1}$ of the first lens element 111 forming the doublet lens 200 in the first lens group 110 is set to 1.51, thus satisfying the condition defined in the conditional expression (1). The Abbe number $\nu_{L1}$ of the first lens element 111 forming the doublet lens 200 in the first lens group 110 is set to 53.1, thus satisfying the condition defined in the conditional expression (2).

The Abbe number $\nu_{L2}$ of the second lens element 112 forming the doublet lens 200 is set to 29.0, thus satisfying the condition defined in the conditional expression (3).

The focal length $f_{L12}$ of the doublet lens 200 is set to 2.5, thus satisfying the condition defined in the conditional expression (4).

The curvature radius R2 of the second surface formed by the bonding surface between the first lens element 111 and the second lens element 112 forming the doublet lens 200 is set to -∞, thus satisfying the condition defined in the conditional expression (5).

The absolute value ΔCTE of a difference between the CTE value $CTE_{g1}$ of the first transparent body (first transparent substrate) 113 and the CTE value $CTE_{g2}$ of the second transparent body (second transparent substrate) 122 is set to 0, thus satisfying the condition defined in the conditional expression (6).

The focal length $f_{g1}$ of the first lens group 110 is set to 1.96, thus satisfying the condition defined in the conditional expression (7).

The focal length $f_{g2}$ of the second lens group 120 is set to -2.34, thus satisfying the condition defined in the conditional expression (8).

The refractive index $n_{g2}$ of the second transparent body (second transparent substrate) 122 in the second lens group 120 is set to 1.52, and the Abbe number $\nu_{g2}$ is set to 55.0, thus satisfying the condition defined in the conditional expressions (9) and (10).

The curvature radius Rs5 of the image plane side convex surface of the fifth lens element 124 in the second lens group 120 is set to 6.2 [mm], thus satisfying the condition defined in the conditional expression (11).

The thickness $T_{g1}$ of the first transparent body (first transparent substrate) 113 in the first lens group 110 is set to 0.4 [mm], thus satisfying the condition defined in the conditional expression (12).

The thickness $T_{g2}$ of the second transparent body (second transparent substrate) 122 in the second lens group 120 is set to 1.00 [mm], thus satisfying the condition defined in the conditional expression (13).

The thickness $T_{buf}$ of the buffer layer 124 is set to 0.1 [mm], thus satisfying the condition defined in the conditional expression (14).

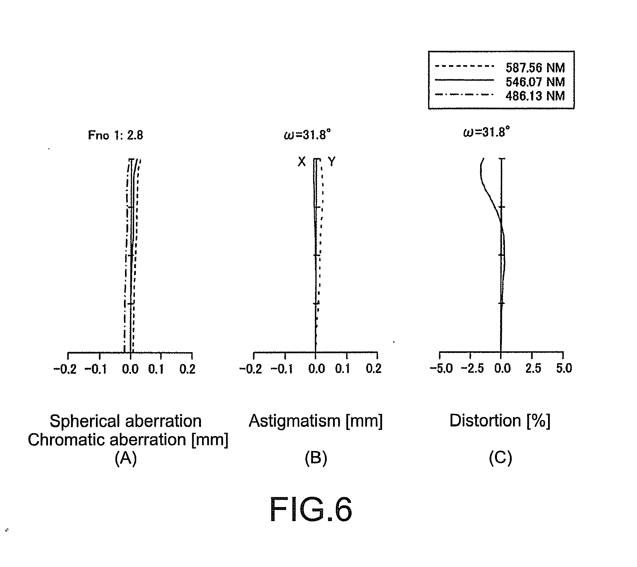

Figs. 6 are aberration diagrams respectively showing a spherical aberration (chromatic aberration), an astigmatism, and a distortion in Example 2. Fig. 6(A) shows the spherical aberration (chromatic aberration), Fig. 6(B) shows the astigmatism, and Fig. 6(C) shows the distortion.

As can be seen from Figs. 6, according to Example 2, the spherical aberration, astigmatism, and distortion are corrected favorably, and an image pickup lens including an optical unit having excellent imaging performance can be obtained.

<3. Third embodiment>

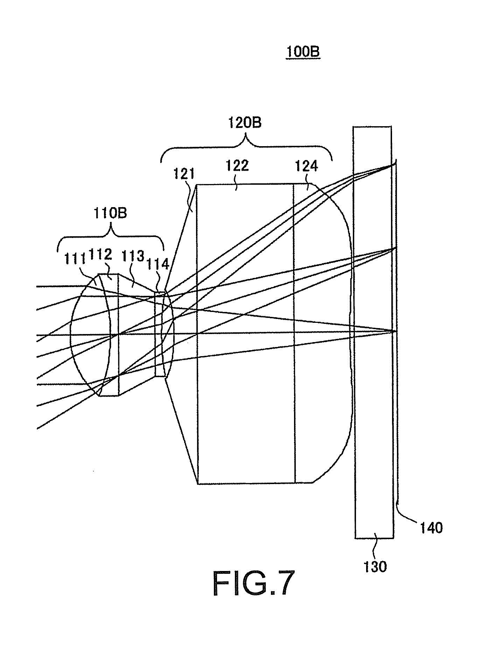

Fig. 7 is a diagram showing a structural example of an image pickup lens according to a third embodiment of the present invention.

The image pickup lens 100B of the third embodiment shown in Fig. 7 has basically the same structure as the image pickup lens 100 of the first embodiment shown in Fig. 1, and setting values of parameters of the constituent elements differ as shown in Example 3 below.

Therefore, specific description on the image pickup lens 100B will be omitted herein.

Hereinafter, Example 3 that uses specific numerical values of the image pickup lens will be described. It should be noted that in Example 3, the surface numbers as shown in Fig. 3 are assigned to the lens elements, buffer layer, and glass substrates (transparent bodies) of the image pickup lens 100B and the cover glass 130 constituting the image pickup portion.

[Example 3]

Tables 9, 10, 11, and 12 show numerical values of Example 3. The numerical values of Example 3 correspond to the image pickup lens 100B shown in Fig. 7.

Table 9 shows the curvature radiuses (R: mm), intervals (d: mm), refractive indexes (nd), and dispersion values ($\nu_d$) of the lens elements, buffer layer, and glass substrates (transparent bodies) corresponding to the surface numbers of the image pickup lens and the cover glass constituting the image pickup portion in Example 3.

[Table 9]

| Structural data of lens of Example 3 | | | | |
|---|---|---|---|---|
| Surface No. | R | d | nd | $\nu_d$ |
| 1 : | 0.858 | 0.428 | 1.54 | 41.7 |
| 2 : | -1.749 | 0.080 | 1.58 | 29.0 |
| 3 : | INFINITY | 0.400 | 1.52 | 55.0 |
| 4 : | INFINITY | 0.066 | 1.58 | 29.0 |
| 5 : | 3.260 | 0.047 | | |
| 6 : | -1.993 | 0.250 | 1.58 | 29.0 |
| 7 : | INFINITY | 1.028 | 1.52 | 55.0 |
| 8 : | INFINITY | 0.600 | 1.54 | 41.7 |
| 9 : | INFINITY | 0.08 | 1.54 | 41.6 |
| 10 : | 5.751 | 0.050 | | |
| 11 : | INFINITY | 0.400 | 1.52 | 64.1 |
| 12 : | INFINITY | 0.0574 | | |

Table 10 shows the fourth-, sixth-, eighth-, and tenth-order aspheric constants of the surface 1 of the first lens element 111, the surface 5 of the second lens element 114, the surface 6 of the fourth lens element 121, and the surface 10 of the fifth lens element 124 that include the aspheric surface in Example 3.

In Table 2, K represents a cone constant, A represents a fourth-order aspheric constant, B represents a sixth-order aspheric constant, C represents an eighth-order aspheric constant, and D represents a tenth-order aspheric constant.

[Table 10]

| Aspheric surface data of Example 3 | | | | | |
|---|---|---|---|---|---|
| First surface | K: - 1.355 | A: 0.270E+00 | B: 0.244E+00 | C: 0.294E+00 | D: - 0.111E+01 |
| Fifth surface | K: 6.483 | A: 0.133E+00 | B: - 0.218E-02 | C: 0.775E+00 | D: 0.776E+01 |
| Sixth surface | K: 9.539 | A: - 0.404E+00 | B: 0.109E+01 | C: - 0.116E+02 | D: 0.221E+02 |
| Tenth surface | K: - 6.443 | A: - 0.876E-01 | B: 0.282E-01 | C: - 0.210E-01 | D: 0.354E-02 |

Table 11 specifically shows a focal length f, a numerical aperture F, a half field angle ω, and a lens length H of the image pickup lens 100C in Example 3.

Here, the focal length f is set to 3.00 [mm], the numerical aperture F is set to 2.8, the half field angle ω is set to 31.9 deg, and the lens length H is set to 3.50 [mm].

[Table 11]

| Structural data of Example 3 |
|---|
| f (focal length) = 3.00 mm |
| F (numerical aperture) = 2.8 |
| ω (half field angle) = 31.9 deg |
| H (total lens length) = 3.50 mm |

Table 12 shows that the conditional expressions (1) to (14) above are satisfied in Example 3.
[Table 12]

| Values of conditional expressions | |
|---|---|
| Conditional expression/Example | Example 3 |
| (1) $n_{L1}$ | 1.54 |
| (2) $\nu_{L1}$ | 41.7 |
| (3) $\nu_{L2}$ | 29.0 |
| (4) $f_{L12}$ | 2.59 |
| (5) R2 | -1.74 |
| (6) $\Delta$CTE | 0.0 |
| (7) $f_{g1}$ | 1.99 |
| (8) $f_{g2}$ | -2.37 |
| (9) $n_{g2}$ | 1.523 |
| (10) $\nu_{g2}$ | 55.0 |
| (11) RS5 | 5.75 |
| (12) $T_{g1}$ | 0.4 |
| (13) $T_{g2}$ | 1.038 |
| (14) $T_{buf}$ | 0.1 |

As shown in Table 12, in Example 3, the refractive index $n_{L1}$ of the first lens element 111 forming the doublet lens 200 in the first lens group 110 is set to 1.54, thus satisfying the condition defined in the conditional expression (1).

The Abbe number $\nu_{L1}$ of the first lens element 111 forming the doublet lens 200 in the first lens group 110 is set to 41.7, thus satisfying the condition defined in the conditional expression (2).

The Abbe number $\nu_{L2}$ of the second lens element 112 forming the doublet lens 200 is set to 29.0, thus satisfying the condition defined in the conditional expression (3).

The focal length $f_{L12}$ of the doublet lens 200 is set to 2.59, thus satisfying the condition defined in the conditional expression (4).

The curvature radius R2 of the second surface formed by the bonding surface between the first lens element 111 and the second lens element 112 forming the doublet lens 200 is set to -1.74, thus satisfying the condition defined in the conditional expression (5).

The absolute value $\Delta$CTE of a difference between the CTE value $CTE_{g1}$ of the first transparent body (first transparent substrate) 113 and the CTE value $CTE_{g2}$ of the second transparent body (second transparent substrate) 122 is set to 0, thus satisfying the condition defined in the conditional expression (6).

The focal length $f_{g1}$ of the first lens group 110 is set to 1.99, thus satisfying the condition defined in the conditional expression (7).

The focal length $f_{g2}$ of the second lens group 120 is set to -2.37, thus satisfying the condition defined in the conditional expression (8).

The refractive index $n_{g2}$ of the second transparent body (second transparent substrate) 122 in the second lens group 120 is set to 1.523, and the Abbe number $\nu_{g2}$ is set to 55.0, thus satisfying the condition defined in the conditional expressions (9) and (10).

The curvature radius Rs5 of the image plane side convex surface of the fifth lens element 124 in the second lens group 120 is set to 5.75 [mm], thus satisfying the condition defined in the conditional expression (11).

The thickness $T_{g1}$ of the first transparent body (first transparent substrate) 113 in the first lens group 110 is set to 0.4 [mm], thus satisfying the condition defined in the conditional expression (12).

The thickness $T_{g2}$ of the second transparent body (second transparent substrate) 122 in the second lens group 120 is set to 1.038 [mm], thus satisfying the condition defined in the conditional expression (13).

The thickness $T_{buf}$ of the buffer layer 124 is set to 0.1 [mm], thus satisfying the condition defined in the conditional expression (14).

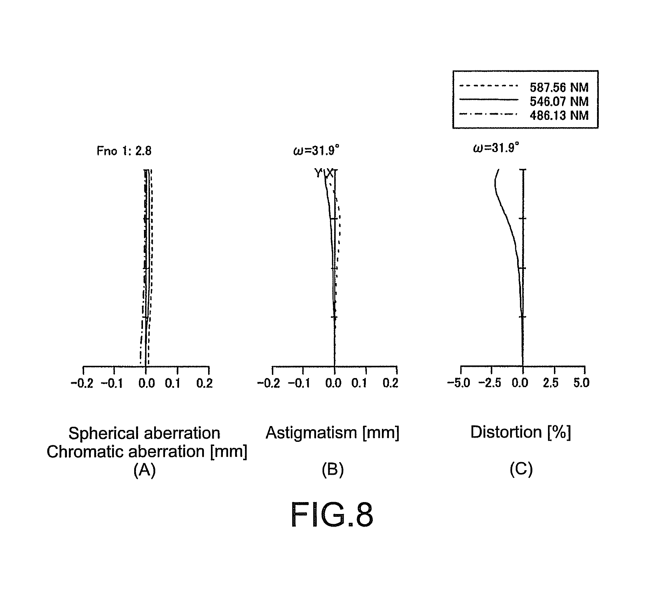

Figs. 8 are aberration diagrams respectively showing a spherical aberration (chromatic aberration), an astigmatism, and a distortion in Example 3. Fig. 8(A) shows the spherical aberration (chromatic aberration), Fig. 8(B) shows the astigmatism, and Fig. 8(C) shows the distortion.

As can be seen from Figs. 8, according to Example 3, the spherical aberration, astigmatism, and distortion are corrected favorably, and an image pickup lens including an optical unit having excellent imaging performance can be obtained.

## <4. Fourth embodiment>

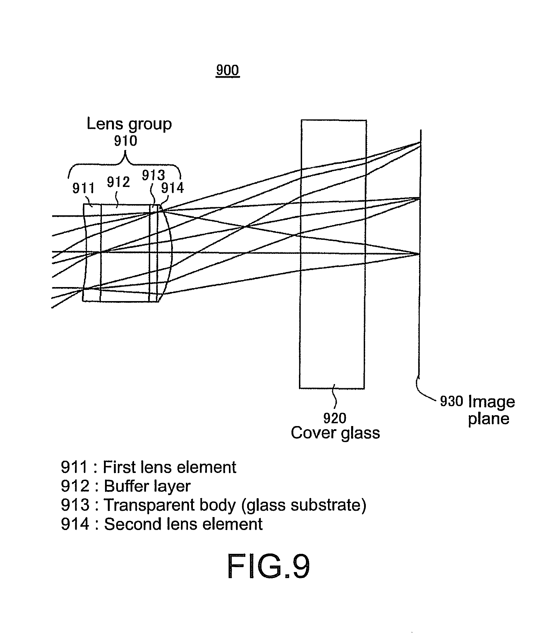

Fig. 9 is a diagram showing a structural example of an image pickup lens adopting the optical unit according to the first embodiment of the present invention.

As shown in Fig. 9, the image pickup lens 900 according to the fourth embodiment includes a lens group 910, a cover glass 920, and an image plane 930 that are sequentially arranged from the object side OBJS to the image plane side.

The image pickup lens 900 is formed as a single focus lens. In addition, an optical unit is formed by the lens group 910.

The lens group is constituted of a bonded body including two lens elements sandwiching a transparent body.

Specifically, the lens group 910 is constituted of a bonded body including a first lens element 911, a buffer layer 912, a transparent body 913, and a second lens element 914 that are sequentially arranged from the object side OBJS to the image plane side.

The buffer layer is a part of a lens and formed of the same material as the lens. The buffer layer 912 is designed and produced after determining a portion at which accuracy as a buffer layer cannot be obtained.

As described above, since the lens group 910 is constituted of the bonded body including the lens elements and the transparent body, the lens surface of the image pickup lens 900 as a whole includes a first surface SF1 and a second surface SF2.

The first surface SF1 is formed by an object side surface of the first lens element 911, and the second surface SF2 is formed by an image plane side surface of the second lens element 914.

In the image pickup lens 900 as a single focus lens, it is assumed that an imaging area (image reception area) of a solid-state image pickup device such as a CC sensor and a CMOS sensor is provided on the image plane 940.

The cover glass 920 is interposed between the second surface SF2 and the image plane 930. Other than the cover glass 920, an infrared cut filter, and a lowpass filter that are formed of a resin or glass, an optical member may be provided between the second surface SF2 and the image plane 930.

It should be noted that in Fig. 9 in this embodiment, the left-hand side is the object side (front), and the right-hand side is the image plane side (back).

In addition, a light flux that has entered from the object side is imaged on the image plane 930.

Hereinafter, the structure of the image pickup lens of this embodiment and operations thereof will be described.

In the lens group 910, the transparent body 913 is formed by a flat-plate glass substrate having, for example, a small Abbe number $v_{g1}$ and a high refractive index $n_{g1}$.

The buffer layer 912 is formed on the object side surface of the transparent body (glass substrate) 913, and the first lens element 911 is bonded to the object side OBJS of the buffer layer 912.

The first lens element 911 is formed by an aspheric lens whose surface on the object side forming the first surface SF1 is concave and that has a large Abbe number $v_{S1}$.

The second lens element 914 is bonded to the image plane side surface of the transparent body (glass substrate) 913.

The second lens element 914 is formed by an aspheric lens whose surface on the image plane side forming the second surface SF2 is convex.

Moreover, a diaphragm is attached to the object side of the transparent body 913 as a material having a light-shield operation, such as a chromium film.

The focal length $f_{L1}$ of the first lens element 911 is set within the range of -20 to -2 [mm], and the focal length $f_{L2}$ of the second lens element 914 is set within the range of 0.4 to 5 [mm].

It should be noted that in descriptions below, the transparent body 913 may be referred to as glass substrate and denoted by the same reference numeral.

The first lens element 911 and the second lens element 914 are formed of a UV-curable resin, a heat-curable resin, plastic, or the like.

Here, the buffer layer 912 is basically a part of the lens and formed of the same glass material as the lens material. The buffer layer 912 is designed and produced while defining a portion with no accuracy as another buffer layer.

The reason why there is no accuracy is because, since a contraction of 5% to 7% occurs during curing of a UV-curable resin, a heat-curable resin, plastic, or the like, a contraction behavior cannot be predicted due to the bonding with respect to the substrate. Moreover, the buffer layer is used for absorbing a thickness error of the transparent body (transparent substrate).

As described above, the image pickup lens 900 of the first embodiment has a 1-group 3-layer structure.

The lens group 910 is formed by the first surface SF1 of the aspheric lens that is concave and has a large Abbe number $v_{s1}$, the transparent body (glass substrate) 913, and the second surface SF2 of the convex aspheric lens, that are arranged from the object side to the image plane side.

The image pickup lens 900 of this embodiment as a single focus lens is structured to satisfy the following conditional expressions (16) to (21).

In the conditional expressions (16) and (17), conditions on the Abbe number $\nu_{L1}$ of the first lens element 911 and the Abbe number $\nu_{L2}$ of the second lens element 914 are defined.

[Expression 16]

$$30 \leq \nu_{L1} \leq 80 \ ... \ (16)$$

[Expression 17]

$$18 \leq \nu_{L2} \leq 45 \ ... \ (17)$$

The first lens element 911 and the second lens element 914 cancel out chromatic aberrations by the first lens element 111 having a large Abbe number and the second lens element 914 having a small Abbe number. Optimal conditions therefor are the conditional expressions (16) and (17).

In the conditional expression (18), conditions on the curvature radius R1 of the object side surface of the first lens element 911 and an effective focal length f of the lens group 910 are defined.

[Expression 18]

$$-3 \leq R1/f \leq -0.7 \ ... \ (18)$$

In the conditional expression (19), conditions on the curvature radius R5 of the image plane side surface (concave surface) of the second lens element 914 and the effective focal length f of the lens group are defined.

[Expression 19]

$$-1.5 \leq R5/f \leq -0.25 \ ... \ (19)$$

In a wide lens that has a horizontal field angle of about 50 degrees, a lens structure called retro focus is known as a desirable lens structure.

This generally has a concave lens, a diaphragm, and a convex lens that are arranged from the object side and is advantageous in an aberration correction and a peripheral light amount.

Similarly, the lens structure is of a structure in which the first lens element 911 as the concave lens, the glass substrate 913 as the diaphragm, and the second lens element 914 as the convex lens are bonded. Bonding surfaces of the lenses are flat surfaces. Therefore, desirable conditions are required for the curvature radius of the first lens element 911 and that of the second lens element 914.

If the curvature radiuses are too small, production tolerance is lowered, and if the curvature radiuses are too large, aberrations cannot be corrected, and desirable characteristics cannot be obtained. Optimal conditions therefor are the conditional expressions (18) and (19).

In the conditional expression (20), the thickness $T_{g1}$ of the transparent body (glass substrate) 913 is defined.

[Expression 20]

$$0.1 \leq T_{g1} \leq 0.7 \ [mm] \ ... \ (20)$$

For reducing an astigmatism and coma aberration that are caused in the lens group 910, it is better to make the transparent body (glass substrate) 913 thin, and thus there is an upper limit. Further, when the transparent body (glass substrate) 913 is too thin, warpage is caused in the substrate to inhibit production. Therefore, there is a lower limit. Thus, an optimal condition is the conditional expression (20).

It should be noted that since there is no process due to the bonding, there is no problem even when the thickness $T_{g1}$ of the transparent body (glass substrate) 913 is as small as about 0.1 mm.

In the conditional expression (21), the thickness $T_{buf}$ of the buffer layer 912 is defined.

[Expression 21]

$$0.005 \leq T_{buf} \leq 0.20 \ [mm] \ \ldots \ (21)$$

In the case where the periphery is convex or almost convex, a buffer layer becomes necessary.

This is because shape accuracy of a lens near a substrate is difficult to be obtained when attaching the lens to the substrate. If the thickness is too large, an aberration occurs, and optical characteristics, particularly an astigmatism and a coma aberration, deteriorate. If the thickness is too small, shape accuracy in the vicinity of a boundary cannot be obtained.

Therefore, an optimal condition is the conditional expression (21).

The conditional expressions (16) to (21) described above are common to Examples 4 and 5 below, and by appropriately adopting them as necessary, more-favorable imaging performance suitable for individual image pickup devices or an image pickup apparatus, and a compact optical system are realized.

It should be noted that the aspheric shape of the lens is expressed by the following expression, with the direction from the object side to the image plane side being a positive direction, k representing a cone constant, A, B, C, and D each representing an aspheric constant, and r representing a center curvature radius. y represents a height of a light beam from the optical axis, and c represents an inverse number of the center curvature radius r (1/r).

It should be noted that X represents a distance from a tangent plane with respect to an apex of the aspheric shape, A represents a fourth-order aspheric constant, B represents a sixth-order aspheric constant, C represents an eighth-order aspheric constant, D represents a tenth-order aspheric constant, E represents a twelfth-order aspheric constant, and F represents a fourteenth-order aspheric constant.

[Expression 22]

Aspheric equation

$$X = \frac{cy^2}{1+\sqrt{1-(1+k)c^1y^2}} + Ay^4 + By^6 + Cy^8 + Dy^{10} + Ey^{12} + Fy^{14}$$

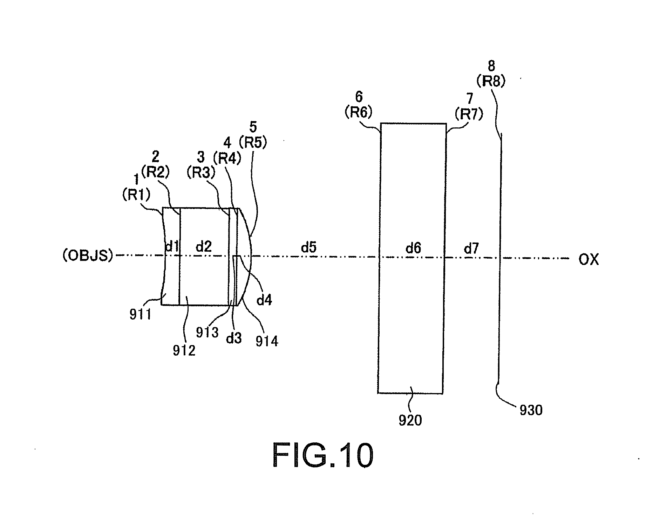

Fig. 10 is a diagram showing the lenses and the substrate constituting the lens groups of the image pickup lens of this embodiment and surface numbers assigned to the cover glass constituting the image pickup portion.

Specifically, a first surface number is assigned to the object side surface (convex surface) of the first lens element 911, and a second surface number is assigned to the boundary surface (bonding surface) between the image plane side surface of the first lens element 911 and the object side surface of the buffer layer 912.

A third surface number is assigned to the boundary surface (bonding surface) between the image plane side surface of the buffer layer 912 and the object side surface of the transparent body (glass substrate) 913, and a fourth surface number is assigned to the boundary surface (bonding surface) between the image plane side surface of the transparent body (glass substrate) 913 and the object side surface of the second lens element 914. A fifth surface number is assigned to the image plane side surface (concave surface) of the second lens element 914.

A sixth surface number is assigned to the object side surface of the cover glass 920, a seventh surface number is assigned to the image plane side surface of the cover glass 920, and an eighth number is assigned to the image plane 930.

Further, as shown in Fig. 10, in the image pickup lens 900 of this embodiment, the center curvature radius of the object side surface of the first lens element 911 (#1) is set to be R1.

The center curvature radius of the boundary surface (bonding surface) 2 between the image plane side surface of the first lens element 911 and the object side surface of the buffer layer 912 is set to be R2.

The center curvature radius of the boundary surface (bonding surface) 3 between the image plane side surface of the buffer layer 912 and the object side surface of the transparent body (glass substrate) 913 is set to be R3.

The center curvature radius of the boundary surface (bonding surface) 4 between the image plane side surface of the transparent body (glass substrate) 913 and the object side surface of the second lens element 914 is set to be R4, and the center curvature radius of the image plane side surface (concave surface) 5 of the second lens element 914 is set to be R5.

The center curvature radius of the object side surface 6 of the cover glass 920 is set to be R6, the center curvature radius of the image plane side surface of the cover glass 920 is set to be R7, and the center curvature radius of the image plane 930 is set to be R8.

It should be noted that the surfaces 2, 3, 4, 6, 7, and 8 and the center curvature radiuses R2, R3, R4, R7, and R8 are infinite (INFINITY).

Further, as shown in Fig. 10, a distance between the surfaces 1 and 2 as a thickness of the first lens element 911 on the optical axis OX is set to be d1, and a distance between the surfaces 2 and 3 as a thickness of the buffer layer 912 on the optical axis OX is set to be d2.

A distance between the surfaces 3 and 4 as a thickness of the transparent body (glass substrate) 913 on the optical axis OX is set to be d3, and a distance between the surfaces 4 and 5 as a thickness of the second lens element 914 on the optical axis OX is set to be d4.

A distance between the image plane side surface 5 of the second lens element 914 and the object side surface 6 of the cover glass 920 on the optical axis OX is set to be d5.

A distance between the object side surface 6 and the image plane side surface as a thickness of the cover glass 920 on the optical axis OX is set to be d6. A distance between the image plane side surface 7 of the cover glass 920 and the image plane 930 on the optical axis OX is set to be d7.

Hereinafter, Example 4 that uses specific numerical values of the image pickup lens will be described. It should be noted that in Example 4, the surface numbers as shown in Fig. 10 are assigned to the lens elements, buffer layer, and glass substrate (transparent body) of the image pickup lens 900 and the cover glass 920 constituting the image pickup portion.

[Example 4]

Tables 13, 14, 15, and 16 show numerical values of Example 4. The numerical values of Example 4 correspond to the image pickup lens 900 shown in Fig. 9.

Table 13 shows the curvature radiuses (R: mm), intervals (d: mm), refractive indexes (nd), and dispersion values ($v_d$) of the lens elements, buffer layer, and glass substrate (transparent body) corresponding to the surface numbers of the image pickup lens and the cover glass constituting the image pickup portion in Example 4.

[Table 13]

| Structural data of lens of Example 4 | | | | |
|---|---|---|---|---|
| Surface No. | R | d | Nd | $v_d$ |
| 1 : | -1.98 | 0.091 | 1.51 | 53.1 |
| 2 : | INFINITY | 0.300 | 1.52 | 64.2 |
| 3 : | INFINITY | 0.050 | 1.58 | 29.0 |
| 4 : | INFINITY | 0.087 | 1.58 | 29.0 |
| 5 : | -0.61412 | 0.800 | | |
| 6 : | INFINITY | 0.400 | 1.52 | 64.2 |
| 7 : | INFINITY | 0.339 | | |
| 8 : | INFINITY | 0.000 | | |

Table 14 shows the fourth-, sixth-, eighth-, and tenth-order aspheric constants of the surface 1 of the first lens element 911 and the surface 5 of the second lens element 914 that include the aspheric surface in Example 4.

In Table 14, K represents a cone constant, A represents a fourth-order aspheric constant, B represents a sixth-order aspheric constant, C represents an eighth-order aspheric constant, and D represents a tenth-order aspheric constant.
[Table 14]

| Aspheric surface data of Example 4 | | | | | |
|---|---|---|---|---|---|
| First surface | K: - 10.00 | A: - 0.166E+01 | B: - 0.550E+01 | C: 0.118E+03 | D: - 0.187E+04 |
| Fifth surface | K: 0.367E- 1 | A: 0.220E+00 | B: 0.434E+01 | C: 0.375E+02 | D: - 0.137E+03 |

Table 5 specifically shows a focal length f, a numerical aperture F, a half field angle ω, and a lens length H of the image pickup lens 900 in Example 4.
Here, the focal length f is set to 1.28 [mm], the numerical aperture F is set to 2.8, the half field angle ω is set to 32.0 deg, and the lens length H is set to 2.07 [mm].
[Table 15]

| Structural data of Example 4 |
|---|
| f (focal length) = 1.28 mm |
| F (numerical aperture) = 2.8 |
| ω (half field angle) = 32.0 deg |
| H (total lens length) = 2.07 mm |

Table 16 shows that the conditional expressions (16) to (21) above are satisfied in Example 4.
[Table 16]

| Values of conditional expressions | |
|---|---|
| Conditional expression/Example | 1 |
| (1) $v_{L1}$ | 53.1 |
| (2) $v_{L1}$ | 29.0 |
| (3) R1/f | -1.542 |
| (4) R5/f | -0.478 |
| (5) $T_{g1}$ | 0.3 |
| (6) $T_{buf}$ | 0.05 |

As shown in Table 16, in Example 4, the Abbe number $v_{L1}$ of the first lens element 911 of the lens group 910 is set to 53.15, thus satisfying the condition defined in the conditional expression (16).
The Abbe number $v_{L2}$ of the second lens element 914 is set to 29.0, thus satisfying the condition defined in the conditional expression (17).
The relationship R1/f between the curvature radius R1 of the object side surface of the first lens element 911 and the effective focal length f of the lens group 910 is set to -1.542, thus satisfying the condition defined in the conditional expression (18).
The relationship R5/f between the curvature radius R5 of the image plane side surface of the second lens element 914 and the effective focal length f of the lens group 910 is set to -0.478, thus satisfying the condition defined in the conditional expression (19).
The thickness $T_{g1}$ of the transparent body 913 is set to 0.3 [mm], thus satisfying the condition defined in the conditional expression (20).
The thickness $T_{buf}$ of the buffer layer 912 is set to 0.05 [mm], thus satisfying the condition defined in the conditional expression (21).

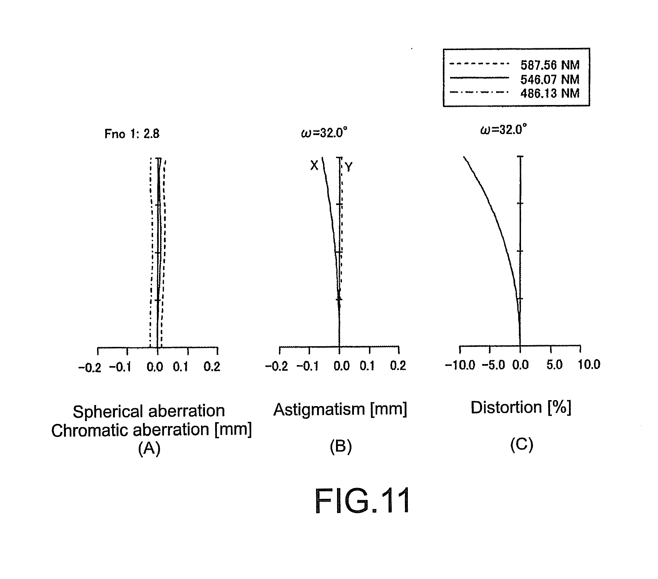

Figs. 11 are aberration diagrams respectively showing a spherical aberration (chromatic aberration), an astigmatism, and a distortion in Example 4. Fig. 11(A) shows the spherical aberration (chromatic aberration), Fig. 11(B) shows the astigmatism, and Fig.11(C) shows the distortion.

As can be seen from Figs. 11, according to Example 4, the spherical aberration, astigmatism, and distortion are corrected favorably, and an image pickup lens including an optical unit having excellent imaging performance can be obtained.

<5. Fifth embodiment>

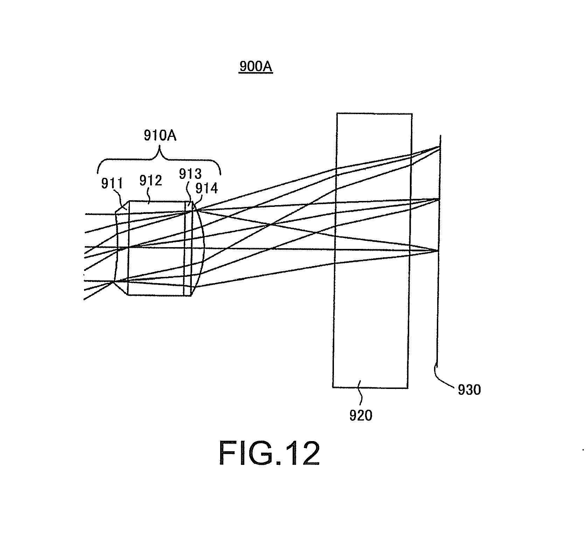

Fig. 12 is a diagram showing a structural example of an image pickup lens according to a fifth embodiment of the present invention.

The image pickup lens 900A of the fifth embodiment shown in Fig. 12 has basically the same structure as the image pickup lens 900 of the first embodiment shown in Fig. 9, and setting values of parameters of the constituent elements differ as shown in Example 5 below.

Therefore, specific description on the image pickup lens 900A will be omitted herein.

Hereinafter, Example 5 that uses specific numerical values of the image pickup lens will be described. It should be noted that in Example 5, the surface numbers as shown in Fig. 10 are assigned to the lens elements, buffer layer, and glass substrate (transparent body) of the image pickup lens 900A and the cover glass 920 constituting the image pickup portion.

[Example 5]

Tables 17, 18, 19, and 20 show numerical values of Example 5. The numerical values of Example 5 correspond to the image pickup lens 900A shown in Fig. 12.

Table 17 shows the curvature radiuses (R: mm), intervals (d: mm), refractive indexes (nd), and dispersion values ($v_d$) of the lens elements, buffer layer, and glass substrate (transparent body) corresponding to the surface numbers of the image pickup lens and the cover glass constituting the image pickup portion in Example 5.

[Table 17]

| Structural data of Example 5 | | | | |
|---|---|---|---|---|
| Surface No. | R | d | nd | $v_d$ |
| 1 : | 1.600 | 0.058 | 1.51 | 53.1 |
| 2 : | INFINITY | 0.300 | 1.85 | 23.8 |
| 3 : | INFINITY | 0.040 | 1.58 | 29.0 |
| 4 : | INFINITY | 0.067 | 1.58 | 29.0 |
| 5 : | -0.490 | 0.700 | | |
| 6 : | INFINITY | 0.400 | 1.52 | 64.2 |
| 7 : | INFINITY | 0.154 | | |
| 8 : | INFINITY | 0.000 | | |

Table 18 shows the fourth-, sixth-, eighth-, and tenth-order aspheric constants of the surface 1 of the first lens element 911 and the surface 5 of the second lens element 914 that include the aspheric surface in Example 5.

In Table 18, K represents a cone constant, A represents a fourth-order aspheric constant, B represents a sixth-order aspheric constant, C represents an eighth-order aspheric constant, and D represents a tenth-order aspheric constant.

[Table 18]

| Aspheric surface data of Example 5 | | | | | |
|---|---|---|---|---|---|
| First surface | K: 7.800 | A: - 0.277E+01 | B: 0.244E+01 | C: 0.552E+03 | D: - 0.352E+04 |
| Fifth surface | K: - 10.000 | A: - 0.965E+01 | B: 0.104E+03 | C: - 0.971E+03 | D: 0.381E+04 |

Table 19 specifically shows a focal length f, a numerical aperture F, a half field angle ω, and a lens length H of the image pickup lens 900A in Example 5.

Here, the focal length f is set to 1.03 [mm], the numerical aperture F is set to 2.8, the half field angle ω is set to 33.2 deg, and the lens length H is set to 1.72 [mm].

[Table 19]

| Structural data of Example 5 |
| --- |
| f (focal length) = 1.03 mm |
| F (numerical aperture) = 2.8 |
| ω (half field angle) = 33.2 deg |
| H (total lens length) = 1.72 mm |

Table 20 shows that the conditional expressions (16) to (21) above are satisfied in Example 5.

[Table 20]

| Values of conditional expressions | |
| --- | --- |
| Conditional expression/Example | 2 |
| (1) $\nu_{L1}$ | 53.1 |
| (2) $\nu_{L2}$ | 29.0 |
| (3) R1/f | -1.56 |
| (4) R5/f | -0.477 |
| (5) $T_{g1}$ | 0.3 |
| (6) $T_{buf}$ | 0.04 |

As shown in Table 20, in Example 5, the Abbe number $\nu_{L1}$ of the first lens element 911 of the lens group 910 is set to 53.15, thus satisfying the condition defined in the conditional expression (16).

The Abbe number $\nu_{L2}$ of the second lens element 914 is set to 29.0, thus satisfying the condition defined in the conditional expression (17).

The relationship R1/f between the curvature radius R1 of the object side surface of the first lens element 911 and the effective focal length f of the lens group 910 is set to -1.56, thus satisfying the condition defined in the conditional expression (18).

The relationship R5/f between the curvature radius R5 of the image plane side surface of the second lens element 914 and the effective focal length f of the lens group 910 is set to -0.477, thus satisfying the condition defined in the conditional expression (19).

The thickness $T_{g1}$ of the glass substrate 913 is set to 0.3 [mm], thus satisfying the condition defined in the conditional expression (20).

The thickness $T_{buf}$ of the buffer layer 912 is set to 0.04 [mm], thus satisfying the condition defined in the conditional expression (21).

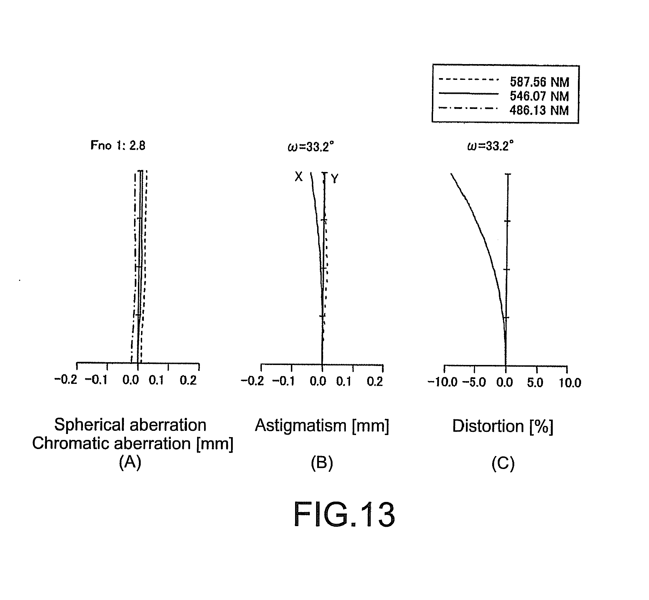

Figs. 13 are aberration diagrams respectively showing a spherical aberration (chromatic aberration), an astigmatism, and a distortion in Example 5. Fig. 13(A) shows the spherical aberration (chromatic aberration), Fig. 13(B) shows the astigmatism, and Fig.13(C) shows the distortion.

As can be seen from Figs. 13, according to Example 5, the spherical aberration, astigmatism, and distortion are corrected favorably, and an image pickup lens including an optical unit having excellent imaging performance can be obtained.

<6. Sixth embodiment>

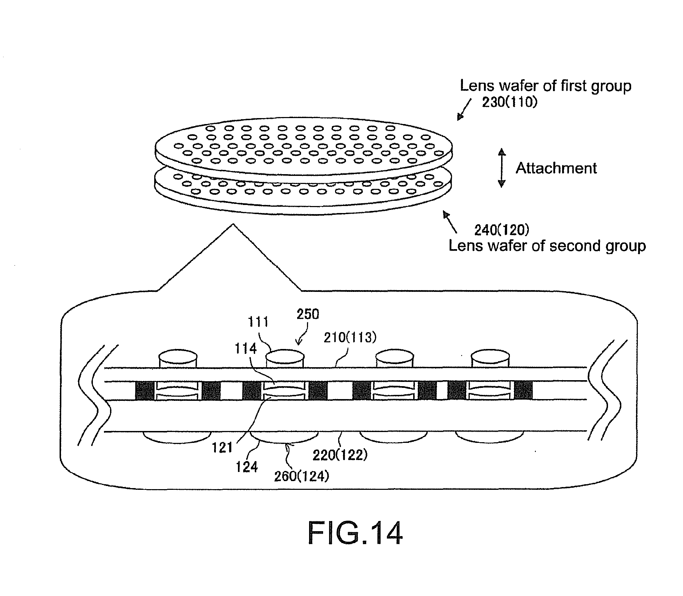

Fig. 14 is a diagram schematically showing wafer level optics according to a sixth embodiment of the present invention.

A large number of replica lenses are formed longitudinally on glass substrates 210 and 220 to thus form a first group 230 and a second group 240.

Next, the two glass wafers are attached to each other, and a large number of lenses 250 and 260 are produced at the same time.

Here, for the attachment, a spacer may be interposed, or a protector or spacer may be attached at the top or bottom.

The image pickup lenses 100, 100A, and 100B according to the first to third embodiments above include the first lens group 110 and the second lens group 120 that are sequentially arranged from the object side OBJS to the image plane 140 side.

The first lens group 110 includes the first lens element 111, the second lens element 112, the first transparent body 113, and the third lens element 114 that are sequentially arranged from the object side OBJS to the image plane 140 side.

The second lens group 120 includes the fourth lens element 121, the second transparent body 122, the second buffer layer 123, and the fifth lens element 124 that are sequentially arranged from the object side OBJS to the image plane 140 side.

The first lens element 111 and the second lens element 112 of the first lens group 110 form a doublet lens.

Therefore, the embodiments above bear the following effects.

According to the image pickup lenses 100, 100A, and 100B according to the first to third embodiments, it is possible to realize a high-resolution and high-performance image pickup optical system using a doublet lens called wafer level optics.

By setting the power of the first lens group 110 to be strongly positive and the power of the second lens group 120 to be strongly negative, the optical length can be shortened while suppressing optical aberrations as much as possible.

By optimally structuring the first lens group 110 and the second lens group 120 while suppressing a chromatic aberration, more favorable cameral performance can be obtained.

By using the doublet lens 200 for the first lens group 110, the aberration correction can be carried out more strictly. Here, the doublet lens is structured by a convexity having a high Abbe number and a concavity having a small Abbe number. As a result, there is an advantage that an optimal design with which the chromatic aberration is eliminated, a degree of freedom in design is raised at other portions, and aberrations are suppressed as a whole can be realized.

By setting the shape of the fifth lens element 124 to be almost convex with respect to the image side, less ghosts appear. Consequently, an incident angle with respect to the sensor can be made obtuse so that optimal optical performance and sufficient back focus can be obtained.

Moreover, with an optimal structure for a production with the wafer level optics, a large-scale production becomes possible at a low cost.

As compared to an optimal system having a normal 3-group 3-layer structure, that is, a 3-layer plastic structure or a 3-layer glass-plastic-plastic structure, for example, the optical unit according to the embodiments of the present invention has excellent optical characteristics than a normal optical system having the same optical length.

Furthermore, due to the wafer level optics, cutout in the same shape as the imager and miniaturization become possible, thus also being advantageous in size.

In addition, since the technique that uses a substrate enables an optical system to be produced at a low cost, an optical system having the same optical performance can be produced at a lower cost than a normal optical system. By the present invention, wafer level optics become more advantageous.

Furthermore, according to the embodiments, a compact image pickup lens whose total length is short and that has excellent aberration characteristics can be realized.

Moreover, the image pickup lenses 900 and 900A according to the fourth and fifth embodiments include the lens group 910 in which lenses are sequentially arranged from the object side OBJS to the image plane 130 side.

The lens group 910 include the first lens element 911, the buffer layer 912, the transparent body 913, and the second lens element 914 that are sequentially arranged from the object side OBJS to the image plane 930 side.

Therefore, the embodiments above bear the following effects.

According to the image pickup lenses 900 and 900A according to the fourth and fifth embodiments, an optimal lens (optical design) can be realized with the wafer level optics. The image pickup lenses 900 and 900A have a structure similar to the lens structure called retro focus, and a horizontal field angle is relatively as wide as about 50 degrees. The concave lens, the diaphragm, and the convex lens are arranged from the object side, with the result that the aberration correction and the peripheral light amount become advantageous.

With such a structure, an incident angle with respect to the sensor can be made obtuse so that optimal optical performance and sufficient back focus can be obtained. With an optimal structure for a production with the wafer level optics, a large-scale production becomes possible at a low cost.

There are the following advantages as compared to a normal optical system having a 2-group 2-layer structure.

(1) Due to the 1-group structure attached to a glass substrate, there is no problem on an assembly of a plurality of lenses, reliability after the assembly, and the like

(2) Since the same shape as the imager can be cutout, there is an advantage that a module itself can be miniaturized.

Further, according to the embodiments, a compact image pickup lens whose total length is short and that has excellent aberration characteristics can be realized.

The image pickup lenses 100, 100A, 100B, 900, and 900A having the characteristics as described above are applicable as a camera lens mounted on a compact electronic apparatus such as a digital camera that uses an image pickup device such as a CCD and a CMOS sensor and a cellular phone.

<7. Seventh embodiment>

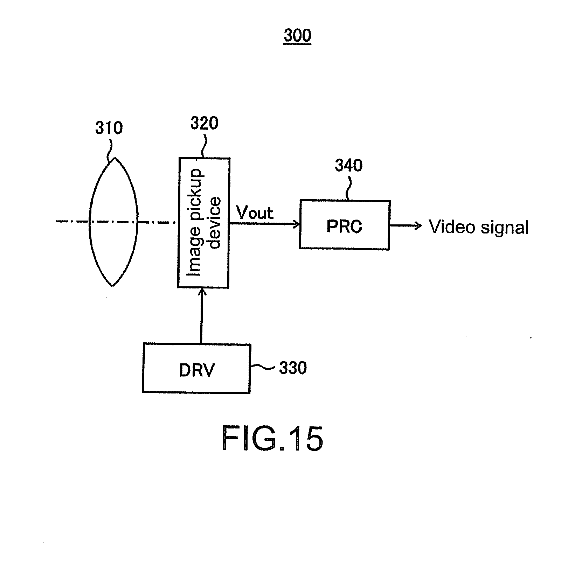

Fig. 15 is a block diagram showing a structural example of an image pickup apparatus adopting the image pickup lens including the optical unit according to the embodiments.

As shown in Fig. 15, the image pickup apparatus 300 includes an optical system 310 to which the image pickup lenses 100, 100A, 100B, 900, and 900A of the embodiments are applied and an image pickup device 320 to which a CCD and a CMOS image sensor (solid-state image pickup device) can be applied.

The optical system 310 guides incident light to an image pickup surface including a pixel area of the image pickup device 320 and images a subject image.

The image pickup apparatus 300 also includes a driving circuit (DRV) 330 that drives the image pickup device 320 and a signal processing circuit (PRC) 340 that processes output signals of the image pickup device 320.

The driving circuit 330 includes a timing generator (not shown) that generates various timing signals including a start pulse and a clock pulse for driving circuits inside the image pickup device 320, and drives the image pickup device 320 based on a predetermined timing signal.

Further, the signal processing circuit 340 carries out predetermined signal processing on output signals from the image pickup device 320.

An image signal processed by the signal processing circuit 340 is recorded onto a recording medium such as a memory. Image information recorded onto the recording medium is hard-copied by a printer. Moreover, the image signal processed by the signal processing circuit 340 is displayed as a moving image on a monitor constituted of a liquid crystal display or the like.

As described above, in the image pickup apparatus such as a digital still camera, by mounting the image pickup lenses 100, 100A, 100B, 900, and 900A described above as the optical system 310, a highly-accurate camera having a lower power consumption can be realized.

Description of Symbols

| | |
|---|---|
| 100, 100A, 100B, 900, 900A | image pickup lens |
| 110, 910 | first lens group |
| 111, 911 | first lens element |
| 112, 914 | second lens element |
| 113, 913 | first transparent body (first glass substrate) |
| 114, 914 | third lens element |
| 121 | fourth lens element |
| 122 | second transparent body (second glass substrate) |
| 123, 912 | buffer layer |
| 124 | fifth lens element |
| 130, 920 | cover glass |
| 140, 930 | image plane |
| 200 | doublet lens |
| 300 | image pickup apparatus |
| 310 | optical system |
| 320 | image pickup device |
| 330 | driving circuit (DRV) |
| 340 | signal processing circuit (PRC) |

**Claims**

**1.** An optical unit, comprising:

   a first lens group; and

a second lens group,

the first lens group and the second lens group being sequentially arranged from an object side to an image plane side,

the first lens group including a first lens element, a second lens element, a first transparent body, and a third lens element that are sequentially arranged from the object side to the image plane side, the first lens element and the second lens element forming a doublet lens,

the second lens group including a fourth lens element, a second transparent body, and a fifth lens element that are sequentially arranged from the object side to the image plane side.

2. The optical unit according to claim 1,

wherein a refractive index $n_{L1}$ of the first lens element, an Abbe number $v_{L1}$ of the first lens element, and an Abbe number $v_{L2}$ of the second lens element satisfy the following conditional expressions.

$$1.4 \leq n_{L1} \leq 1.65$$

$$38 \leq v_{L1} \leq 80$$

$$18 \leq v_{L2} \leq 45$$

3. The optical unit according to claim 1,

wherein the doublet lens formed by the first lens element and the second lens element is a plane-convex lens that is convex on the object side and planar on the image plane side.

4. The optical unit according to claim 1,

wherein the third lens element is a plane-concave lens that is planar on the object side and concave on the image plane side.

5. The optical unit according to claim 1,

wherein the fourth lens element is a plane-concave lens that is concave on the object side and planar on the image plane side.

6. The optical unit according to claim 1,

wherein the fifth lens element is a plane-convex lens that is planar on the object side and convex on the image plane side.

7. The optical unit according to claim 1,

wherein the fifth lens element is a plane-concavo-convex lens that is planar on the object side and concavo-convex on the image plane side.

8. The optical unit according to any one of claims 1 to 7,

wherein at least one of the first transparent body and the second transparent body is formed of glass.

9. The optical unit according to any one of claims 1 to 8,

wherein at least one of the first lens element, the second lens element, the third lens element, the fourth lens element, and the fifth lens element is formed of a UV-curable resin or a heat-curable resin.

10. An image pickup apparatus, comprising:

an image pickup device; and

an optical unit that forms an image of a subject image on the image pickup device and includes a first lens group and a second lens group,

the first lens group and the second lens group being sequentially arranged from an object side to an image plane side,

the first lens group including a first lens element, a second lens element, a first transparent body, and a third lens element that are sequentially arranged from the object side to the image plane side, the first lens element and the second lens element forming a doublet lens,

the second lens group including a fourth lens element, a second transparent body, and a fifth lens element that are sequentially arranged from the object side to the image plane side.

11. An optical unit, comprising
a lens group in which lenses are sequentially arranged from an object side to an image plane side, the lens group including a first lens element, a transparent body, and a second lens element that are sequentially arranged from the object side to the image plane side.

12. The optical unit according to claim 11,
wherein a Abbe number $\nu_{L1}$ of the first lens element and an Abbe number $\nu_{L2}$ of the second lens element satisfy the following conditional expressions.

$$30 \leq \nu_{L1} \leq 80$$

$$18 \leq \nu_{L2} \leq 45$$

13. The optical unit according to claim 11,
wherein the first lens element is a plane-concave lens that is concave on the object side and planar on the image plane side.

14. The optical unit according to claim 11,
wherein the second lens unit is a plane-convex lens that is planar on the object side and convex on the image plane side.

15. The optical unit according to any one of claims 11 to 14,
wherein the transparent body is formed of glass.

16. The optical unit according to any one of claims 11 to 15,
wherein at least one of the first lens element and the second lens element is formed of a UV-curable resin.

17. The optical unit according to any one of claims 11 to 15,
wherein at least one of the first lens element and the second lens element is formed of a heat-curable resin.

18. An optical unit, comprising
a lens group in which lenses are sequentially arranged from an object side to an image plane side, the lens group including a first lens element, a buffer layer, a transparent body, and a second lens element that are sequentially arranged from the object side to the image plane side.

19. An image pickup apparatus, comprising:

an image pickup device; and
an optical unit that forms an image of a subject image on the image pickup device and includes
a lens group in which lenses are sequentially arranged from an object side to an image plane side, the lens group including a first lens element, a transparent body, and a second lens element that are sequentially arranged from the object side to the image plane side.

20. The image pickup apparatus according to claim 19, further comprising
a signal processor that processes an output signal from the image pickup device and includes a function of correcting a distortion.

FIG.1

111 : First lens element
112 : Second lens element
113 : First transparent body (first glass substrate)
114 : Third lens element
121 : Fourth lens element
122 : Second transparent body (second glass substrate)
123 : Second buffer layer
124 : Fifth lens element
200 : Doublet lens

FIG.2

FIG.3

FIG.4

FIG.5

| | 587.56 NM |
| | 546.07 NM |
| | 486.13 NM |

Fno 1: 2.8

$\omega$=31.8°

$\omega$=31.8°

X  Y

-0.2  -0.1  0.0  0.1  0.2

-0.2  -0.1  0.0  0.1  0.2

-5.0  -2.5  0.0  2.5  5.0

Spherical aberration
Chromatic aberration [mm]
(A)

Astigmatism [mm]
(B)

Distortion [%]
(C)

# FIG.6

FIG.7

Fno 1: 2.8

ω=31.9°

ω=31.9°

```
---------  587.56 NM
─────────  546.07 NM
—·—·—·—·  486.13 NM
```

-0.2 -0.1 0.0 0.1 0.2

-0.2 -0.1 0.0 0.1 0.2

-5.0 -2.5 0.0 2.5 5.0

Spherical aberration
Chromatic aberration [mm]
(A)

Astigmatism [mm]

(B)

Distortion [%]

(C)

# FIG.8

<u>900</u>

Lens group
910

913

911   912   914

911 : First lens element
912 : Buffer layer
913 : Transparent body (glass substrate)
914 : Second lens element

920
Cover glass

930 Image
plane

FIG.9

FIG.10

587.56 NM
546.07 NM
486.13 NM

Fno 1: 2.8          ω=32.0°          ω=32.0°

-0.2 -0.1  0.0  0.1  0.2      -0.2 -0.1  0.0  0.1  0.2      -10.0 -5.0  0.0  5.0  10.0

Spherical aberration        Astigmatism [mm]        Distortion [%]
Chromatic aberration [mm]
(A)                              (B)                      (C)

# FIG.11

900A

910A

911  912  913  914

FIG.12

930

920

Fno 1: 2.8

ω=33.2°

ω=33.2°

--------- 587.56 NM
————— 546.07 NM
—·—·—·— 486.13 NM

-0.2 -0.1 0.0 0.1 0.2

-0.2 -0.1 0.0 0.1 0.2

-10.0 -5.0 0.0 5.0 10.0

Spherical aberration
Chromatic aberration [mm]
(A)

Astigmatism [mm]
(B)

Distortion [%]
(C)

FIG.13

Lens wafer of first group
230(110)

Attachment

240(120)
Lens wafer of second group

250
111
114   210(113)

121
124
220(122)
260(124)

FIG.14

<u>300</u>

FIG.15

## INTERNATIONAL SEARCH REPORT

| | International application No. |
|---|---|
| | PCT/JP2010/005707 |

**A. CLASSIFICATION OF SUBJECT MATTER**
*G02B13/00(2006.01)i, G02B13/18(2006.01)i*

According to International Patent Classification (IPC) or to both national classification and IPC

**B. FIELDS SEARCHED**

Minimum documentation searched (classification system followed by classification symbols)
G02B13/00, G02B13/18

Documentation searched other than minimum documentation to the extent that such documents are included in the fields searched
Jitsuyo Shinan Koho        1922–1996   Jitsuyo Shinan Toroku Koho   1996–2010
Kokai Jitsuyo Shinan Koho   1971–2010   Toroku Jitsuyo Shinan Koho   1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Microfilm of the specification and drawings annexed to the request of Japanese Utility Model Application No. 054303/1980(Laid-open No. 149716/1980) (Olympus Optical Co., Ltd.), 28 October 1980 (28.10.1980), page 6, line 1 to page 11; fig. 9 (Family: none) | 1,2,8-10 |
| X | JP 51-068242 A (Olympus Optical Co., Ltd.), 12 June 1976 (12.06.1976), page 2, lower left column, line 9 to page 4, upper right column, line 6; fig. 9 (Family: none) | 1,2,8-10 |

| [X] Further documents are listed in the continuation of Box C. | [ ] See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 December, 2010 (07.12.10) | 14 December, 2010 (14.12.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/005707

C (Continuation).   DOCUMENTS CONSIDERED TO BE RELEVANT

| Category* | Citation of document, with indication, where appropriate, of the relevant passages | Relevant to claim No. |
|---|---|---|
| X | JP 3-091708 A  (Olympus Optical Co., Ltd.),<br>17 April 1991 (17.04.1991),<br>page 4, lower left column, line 6 to page 12,<br>upper right column, line 17<br>(Family: none) | 1,2,8-10 |
| X | JP 7-191265 A  (Olympus Optical Co., Ltd.),<br>28 July 1995 (28.07.1995),<br>paragraphs [0011] to [0032]; fig. 1, 8, 16<br>& US 5793539 A | 1,2,8-10 |
| A | JP 2009-157402 A  (Konica Minolta Opto, Inc.),<br>16 July 2009 (16.07.2009),<br>entire text; all drawings<br>& JP 2008-233884 A        & JP 4293291 B<br>& JP 2009-301046 A        & JP 2010-2921 A<br>& US 2010/0046096 A       & US 2010/0091387 A<br>& US 2010/0134903 A       & US 2010/0134905 A<br>& US 2010/0166413 A       & EP 2113800 A1<br>& EP 2113802 A1           & EP 2124081 A1<br>& EP 2113801 A1           & EP 2116882 A1<br>& WO 2008/102648 A1       & WO 2008/102773 A1<br>& WO 2008/102774 A1       & WO 2008/102775 A1<br>& WO 2008/102776 A1       & CN 101606095 A<br>& KR 10-2010-0014801 A | 1,2,8-10 |
| A | WO 2008/102776 A1  (Konica Minolta Opto, Inc.),<br>28 August 2008 (28.08.2008),<br>entire text; all drawings<br>& JP 2008-233884 A        & JP 4293291 B<br>& JP 2009-157402 A        & JP 2009-301046 A<br>& JP 2010-2921 A          & US 2010/0046096 A<br>& US 2010/0091387 A       & US 2010/0134903 A<br>& US 2010/0134905 A       & US 2010/0166413 A<br>& US 2010/0188555 A       & EP 2116882 A1<br>& EP 2163931 A1           & EP 2113800 A1<br>& EP 2113802 A1           & EP 2124081 A1<br>& EP 2113801 A1           & WO 2008/102648 A1<br>& WO 2008/102773 A1       & WO 2008/102774 A1<br>& WO 2008/102775 A1       & WO 2009/004965 A1<br>& CN 101606095 A          & KR 10-2010-0014801 A<br>& CN 101688967 A          & KR 10-2010-0025551 A | 1,2,8-10 |

Form PCT/ISA/210 (continuation of second sheet) (July 2009)

## INTERNATIONAL SEARCH REPORT

International application No.

PCT/JP2010/005707

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:
   The invention relating to an optical unit comprising a first lens group and a second lens group that are disposed in this order from a subject-side toward an image plane-side, wherein the first lens group includes a first lens element, a second lens element, a first transparent body and a third lens element from the subject-side toward the image plane-side, (continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1, 2, 8 - 10

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2010/005707

<u>Continuation of Box No.III of continuation of first sheet(2)</u>

the second lens group includes a forth lens element, a second transparent body and a fifth lens element that are disposed in this order from the subject-side toward the image plane-side, and said first lens element and said second lens element form a tablet lens (joined lens), is described in the microfilm of the specification and drawings annexed to the request of Japanese Utility Model Application No. 55-054303 (Laid-open No. 55-149716), (page 6, line 1 - page 11, fig. 9, etc.).

Therefore, the invention in claim 1 cannot be considered to be novel in the light of the invention described in the microfilm of the specification and drawings annexed to the request of Japanese Utility Model Application No. 55-054303 (Laid-open No. 55-149716), (page 6, line 1 - page 11, fig. 9, etc.), and does not have a special technical feature. Consequently, nine inventions (invention groups) respectively having a special technical feature as indicated below are involved in claims.

Meanwhile, the invention in claim 1 having no special technical feature is classified into invention 1.

(Invention 1)
The inventions in claims 1, 2, 8 - 10

(Invention 2)
The invention in claim 3

(Invention 3)
The invention in claim 4

(Invention 4)
The invention in claim 5

(Invention 5)
The invention in claim 6

(Invention 6)
The invention in claim 7

(Invention 7)
The inventions in claims 11 - 17

(Invention 8)
The invention in claim 18

(Invention 9)
The inventions in claims 19, 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005517984 A
- JP 2003001550 A